# EUROPÄISCHE PATENTSCHRIFT

(11) **EP 2 548 470 B1**
(45) Veröffentlichungstag und Bekanntmachung des Hinweises auf die Patenterteilung: **03.12.2014**
(21) Anmeldenummer: 12176572.1
(22) Anmeldetag: 16.07.2012
(51) Int. Cl.: B01L 9/00, B01L 9/02, G01N 35/00

(54) **Labortisch**
Laboratory table
table de laboratoire

(30) Priorität: 21.07.2011 CH 12192011
(43) Veröffentlichungstag der Anmeldung: 23.01.2013
(60) Teilanmeldung: 14190404.5
(73) Patentinhaber: Tecan Trading AG, 8708 Männedorf (CH)
(72) Erfinder: Isgrò, Claudio, 8635 Dürnten (CH)
(74) Vertreter: OK pat AG

(56) Entgegenhaltungen:
- JP-A- 2010 178 796
- US-A1- 2010 282 133

## Beschreibung

Die Erfindung betrifft einen Labortisch, insbesondere für automatisierte Laborsysteme, der zumindest einen Rahmen mit einem vorderen und einem diesem gegenüberliegenden hinteren Rahmenstück sowie eine Anzahl an diesem zumindest einen Rahmen positionierbare Tischplatten-Elemente umfasst.

Grössere Laboranlagen, insbesondere automatisierte Laborsysteme, umfassen meistens einen Grundrahmen, auf den eine Labortischplatte aufgelegt ist. Diese Labortischplatte dient als Arbeitsfläche für die Roboterarme, die von oben auf die Labortischplatte zugreifen. Die Roboterarme sind üblicherweise mit Pipettenspitzen für den Transport von Flüssigkeiten oder mit Greifern für den Transport von Labware wie z.B. Mikroplatten oder Probenröhrchen versehen. Als ein Beispiel für ein derartiges Laborsystem sei die Freedom EVO^{®} Liquid Handling Workstation des aktuellen Anmelders genannt. Oftmals soll auch der Platz unterhalb der Arbeitsfläche für zusätzliche Apparate wie Zentrifugen, Inkubatoren, Mikroplattenreader etc. genutzt werden können. Dazu werden beispielsweise Aussparungen in die Tischplatte gesägt, damit Roboterarme auf die Apparate unter der Arbeitsfläche für den Transport von Labware (z.B. zum, Beladen und Entladen einer Zentrifuge) zugreifen können.

Auf den Arbeitsflächen derartiger "Liquid Handling Workstations" oder "Robotic Sample Processors" (RSP), finden sich häufig Apparate wie Mikroplatteninkubatoren, Polymerase Chain Reaction (PCR) - Thermocycler für die Amplifizierung von Nukleinsäuren, Solid Phase Extraction (SPE) Module mit verhältnismässig grosser Bauhöhe. Manche dieser Apparate sind so hoch, dass die an den Roboterarmen montierten Pipettenspitzen nicht mehr über sie hinweg bewegt werden können. Die Apparate müssen folglich als Hindernisse umfahren werden. Wenn hohe Apparate auf einer zweiten unteren Arbeitsfläche platziert werden können, bleiben die direkten Fahrwege der Roboterarme mit Pipettenspitzen oder Greifern frei.

Für das Pipetieren in Mikroplatten mit 384 Wells (Mittenabstand 4.5 mm) oder 1526 Wells (Mittenabstand 2.25 mm) ist ein sehr genaues Ausrichten der Pipettenspitzen am Roboterarm zu den Wells der Mikroplatten auf der Arbeitsfläche notwendig. Durchgehende Labortischplatten sind oft mit Rastnocken oder anderen Halterungen für das Positionieren von sogenannten "Carriers", die die Labware wie z.B. Mikroplatten tragen, versehen, um die geforderte Postionisiergenauigkeit zu erreichen.

Aus dem Stand der Technik sind Labortische mit Tischplattenelementen bekannt. Dabei handelt es sich gemäss JP 11-137 344 A1 beispielsweise um die Nutzung von Büropulten als Labortische, wobei vier Büropulte mittels eines Rahmens in einem Rechteck angeordnet und gehalten werden und eine Labortischplatte auf diesen Rahmen gelegt wird.

Aus JP 8-131 852 A1 ist ein Labortisch bekannt, bei dem keine Verkabelungen sichtbar sind oder die Benutzung des Labortischs behindern können. Die Arbeitsplatte dieses Labortisches besteht aus einen vorderen und einem hinteren Teil, die jeweils auf einem der Grösse dieser Teilplatten entsprechenden Rahmen aufliegen. Die Kabel für die notwendigen elektrischen Anschlüsse können in spezielle Kabelkanäle gelegt werden.

Als weiteren Stand der Technik werden JP 2010 178 796 und US 2010/282133 angesehen.

Die Aufgabe der vorliegenden Erfindung ist es, einen alternativen Labortisch vorzuschlagen, der zumindest einen Rahmen mit einem vorderen und einem diesem gegenüberliegenden hinteren Rahmenstück sowie an diesem zumindest einen Rahmen positionierbare Tischplatten-Elemente umfasst.

Diese Aufgabe wird gemäss einem ersten Aspekt dadurch gelöst, dass ein Labortisch mit den Merkmalen des unabhängigen Anspruchs 1 vorgeschlagen wird.

Diese Aufgabe wird gemäss einem zweiten Aspekt dadurch gelöst, dass ein Verfahren mit den Merkmalen des unabhängigen Anspruchs 24 zum Bereitstellen eines Labortischs vorgeschlagen wird, wobei dieser Labortisch zumindest einen Rahmen mit einem vorderen und einem diesem gegenüberliegenden hinteren Rahmenstück sowie an diesem zumindest einen Rahmen positionierbare Tischplatten-Elemente umfasst.

Weitere erfindungsgemässe Merkmale sowie eine erfindungsgemässe Verwendung eines Spannhebels ergeben sich aus den abhängigen Ansprüchen.

Vorteile des erfindungsgemässen Labortischs umfassen:
- Einfache Laborgeräte können mit einzelnen oder wenigen Tischplattenelementen ausgestattet werden.
- Grössere Laborgeräte bis hin zu komplexen Laboranlagen, wie z.B. sogenannte "Liquid Handling Workstations" oder "Robotic Sample Processors" (RSP), können mit einer Anzahl modularer Tischplattenelemente ausgestattet werden.
- Die erfindungsgemässen, modularen Tischplattenelemente sind in oder an einem Rahmen, der mit den erfindungsgemässen Rastschienen ausgestattet ist, beliebig austausch- und ersetzbar.
- Die austauschbaren Tischplattenelemente können ganz spezielle Einrichtungen und/oder Aufbauten umfassen, so dass Bereiche der Arbeitsfläche von Laborgeräten oder Laboranlagen permanent oder auch nur temporär bestimmten Arbeitsabläufen zugeordnet werden können.
- Wird in einem grösseren Laborgerät oder in einer komplexen Laboranlage eine durch die eingebauten Tischplattenelemente gebildete Ebene als Hauptarbeitsebene bestimmt, so können oberhalb und/oder unterhalb dieser Hauptarbeitsebene zusätzlich Nebenarbeitsebenen bestimmt und mit weiteren Tischplattenelementen bestückt werden.
- Durch das Absenken der Tischplattenelemente auf eine untere Nebenarbeitsebene können bauhöhere Komponenten in Laboranlagen eingebaut werden, so dass der Bewegungsbereich der in diesen Laboranlagen vorhandenen Roboter wesentlich weniger beeinträchtigt wird.
- Ausgewählte Bereiche der Arbeitsfläche von Laborgeräten oder Laboranlagen können zum Ermöglichen des Transfers von Behältern (z.B. zum Beladen/Entladen einer Zentrifuge) offen gelassen oder mit Tischplattenelementen ausgestatten werden, die entsprechende Durchreichöffnungen aufweisen.
- Bereiche mit unterer Arbeitsfläche neben oder zwischen Arbeitsflächen der oberen Ebene können baukastenartig aus bestehenden verschiedenen Tischplatten-Elementen zusammengestellt werden.
- Einzeln einlegbare Tischlatten-Elemente bedingen naturgemäss grössere Toleranzen als durchgehende Labortischplatten. Mechanische Toleranzen können sich dabei ungünstig aufsummieren. Deshalb werden die Tischplatten-Elemente durch Festklemmen oder Verspannen im Rahmen bevorzugt fixiert.
- Durch das Einklemmen eines Rahmenstücks mit einer Anschlagfläche in einer Rastschiene/Rastbolzen-Kombination und mit dem Spannbügel eines Spannhebels ergibt sich eine kraftschlüssige, versperrte Fixierung der Rastbolzen, ohne dass der Rahmen des Laborgeräts oder der Laboranlage verspannt oder gar deformiert würde. Dadurch werden die speziellen Einrichtungen und/oder Aufbauten der Tischplattenelemente und damit auch auf diesen Einrichtungen und/oder Aufbauten platzierte Behälter bevorzugt exakt positioniert.
- Für jede Konfiguration des automatisierten Laborsystems, bei dem sich die Apparate unter der Arbeitsfläche an einem anderen Ort befinden, ist eine andere Labortischplatte mit veränderter Aussparung notwendig. Die Anzahl der Labortischplattenvarianten wird schnell immer grösser. Durch geschicktes Kombinieren einzelner unter Umständen verschieden breiter Tischplatten-Elemente und Labortisch-Elementen mit Aussparungen können alle Varianten von Arbeitsflächen baukastenartig zusammengestellt werden.
- Die Modularität der Tischplatten-Elemente in Kombination mit dem modularen Raster der Befestigung der Rastnocken an den Tischplatten-Elementen und der Einteilung der Rastöffnungen in den Rastschienen ermöglicht eine beliebige Auswahl und Austauschbarkeit der Tischplatten-Elemente, so dass auch bestehende Laboranlagen einfach für andere Verwendungszwecke umgebaut werden können.

Der erfindungsgemässe Labortisch wird an Hand der beiliegenden Zeichnungen näher erläutert, wobei diese Zeichnungen beispielhafte Ausführungsformen darstellen und den Umfang der vorliegenden Erfindung nicht beschränken. Dabei zeigt:
- Fig. 1: eine Draufsicht auf einen Labortisch gemäss einer ersten Ausführungsform mit einer Anzahl in einen Zwischenraum des Rahmens eingebauter Tischplatten-Elemente;
- Fig. 2: eine Draufsicht auf einen Labortisch gemäss einer zweiten Ausführungsform mit einer Anzahl teilweise in einen Zwischenraum des Rahmens eingebauter und teilweise den Rahmen überragender Tischplatten-Elemente;
- Fig. 3: eine Unteransicht eines Labortischs gemäss einer dritten Ausführungsform mit einem in einen Zwischenraum des Rahmens eingebauten Tischplatten-Element einer unteren Plattenebene und mit einer Anzahl den Rahmen beidseits zumindest teilweise überragender Tischplatten-Elemente einer oberen Plattenebene;
- Fig. 4: einen vertikalen Querschnitt durch das vordere und das hintere Rahmenstück des Labortisch-Rahmens mit einem in der unteren Plattenebene und einem in der oberen Plattenebene eingebauten Tischplatten-Element;
- Fig. 5: Detailschnitte zu Figur 4, wobei:
Fig. 5A einen Vertikalschnitt durch den oberen Teil des vorderen Rahmenstücks mit Rastschiene, Anschlagfläche und Tischplatten-Element mit Spannhebel, und
Fig. 5B einen Vertikalschnitt durch den oberen Teil des hinteren Rahmenstücks mit Rastschiene und Rastbolzen zeigt;
- Fig. 6: Detailansichten auf eine Rastschiene / Rastbolzen - Kombination gemäss einer ersten Ausführungsvariante, wobei:
Fig. 6A den Rastbolzen beim Einsenken in die hintere obere Rastschiene während des Einbaus des Tischplatten-Elements,
Fig. 6B den Rastbolzen in einer Fixierposition in der hinteren oberen Rastschiene, in welcher er festgehalten wird, und
Fig. 6C den Rastbolzen in einer Endposition zeigt, in welcher er in der vorderen oberen Rastschiene versperrt festgehalten wird;
- Fig. 7: Detailschnitte durch die Rastschiene / Rastbolzen - Kombination gemäss der ersten Ausführungsvariante von Fig. 6, wobei:
Fig. 7A den in der Aussparung der Rastschiene platzierten Rastbolzen während des Einbaus des Tischplatten-Elements,
Fig. 7B die Rastöffnung hinter dem Rastbolzen, und
Fig. 7C den Rastbolzen in einer Endposition zeigt, in welcher er in der vorderen oberen Rastschiene versperrt festgehalten wird;
- Fig. 8: Detailansichten auf eine Rastschiene / Rastbolzen - Kombination gemäss einer zweiten und dritten Ausführungsvariante, wobei:
Fig. 8A den Rastbolzen beim Einsenken in die hintere obere Rastschiene gemäss einer zweiten Ausführungsvariante während des Einbaus des Tischplatten-Elements,
Fig. 8B den Rastbolzen beim Einschieben in die hintere obere Rastschiene gemäss einer dritten Ausführungsvariante während des Einbaus des Tischplatten-Elements, und
Fig. 8C den Rastbolzen in einer Endposition zeigt, in welcher er in der vorderen oberen Rastschiene gemäss einer zweiten Ausführungsvariante versperrt festgehalten wird;
- Fig. 9: Detailschnitte durch die Rastschiene / Rastbolzen - Wechselwirkung gemäss der zweiten und dritten Ausführungsvariante von Fig. 8, wobei:
Fig. 9A den in der Aussparung der Rastschiene platzierten Rastbolzen während des Einbaus des Tischplatten-Elements,
Fig. 9B die Rastöffnung hinter dem Rastbolzen, und
Fig. 9C den Rastbolzen in einer Endposition zeigt, in welcher er in der vorderen oberen Rastschiene versperrt festgehalten wird;
- Fig. 10: Detailansichten auf eine Spannhebel / Anschlagfläche - Wechselwirkung in der oberen Plattenebene, wobei:
Fig. 10A den Spannhebel in offener Position, und
Fig. 10B den Spannhebel in verriegelter Position zeigt;
- Fig. 11: Detailansichten auf eine Spannhebel / Rastschiene - Wechselwirkung in der unteren Plattenebene, wobei:
Fig. 11A den Spannhebel in offener Position, und
Fig. 11B den Spannhebel in verriegelter Position zeigt;
- Fig. 12: Detailschnitte durch eine hintere Rastschiene beim Einbauen eines Tischplatten-Elements, wobei:
Fig. 12A den ersten Schritt des Einlegens eines Tischplatten-Elements mit Beaufschlagen der hinteren Rastschiene mit einem Rastbolzen gemäss einer ersten Ausführungsform;
Fig. 12B den zweiten Schritt des Einlegens des Tischplatten-Elements mit zusätzlichem Beaufschlagen eines hinteren Anschlags mit dem Rastbolzen gemäss der ersten Ausführungsform;
Fig. 12C den dritten Schritt des Einlegens des Tischplatten-Elements mit Schwenken in die Horizontale bei gleichzeitigem Beaufschlagen der hinteren Rastschiene und des hinteren Anschlags mit dem Rastbolzen gemäss der ersten Ausführungsform;
Fig. 12D den vierten Schritt des Einlegens des Tischplatten-Elements mit horizontalem Verschieben und Feststellen des Tischplatten-Elements mit dem Rastbolzen gemäss der ersten Ausführungsform zeigt;
Fig. 12E den dritten Schritt des Einlegens des Tischplatten-Elements mit Schwenken in die Horizontale bei gleichzeitigem Beaufschlagen der hinteren Rastschiene und des hinteren Anschlags mit einem Rastbolzen gemäss einer zweiten Ausführungsform; und
Fig. 12F den vierten Schritt des Einlegens des Tischplatten-Elements mit horizontalem Verschieben und Feststellen des Tischplatten-Elements mit einem Rastbolzen gemäss einer dritten Ausführungsform zeigt.

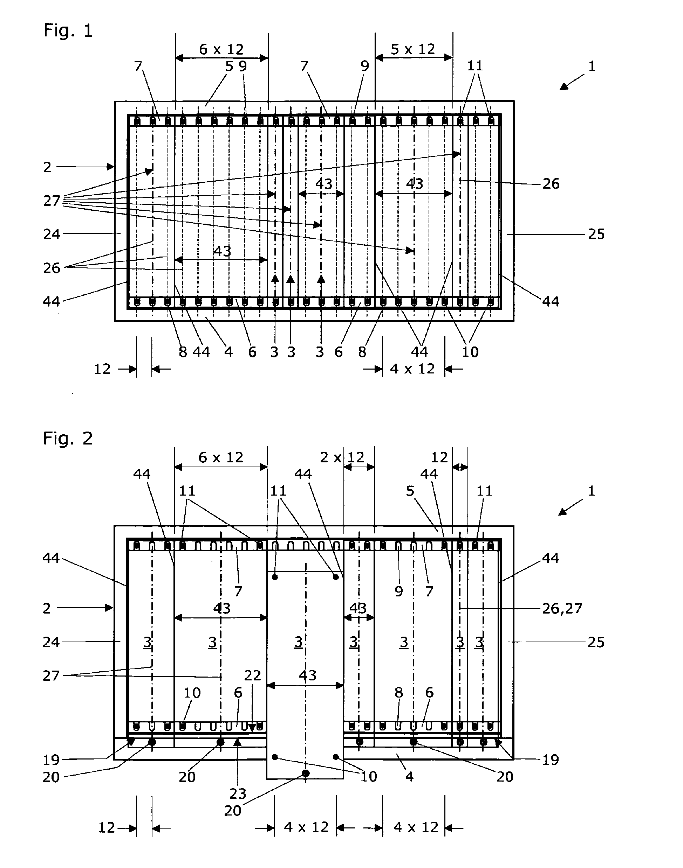

Die Figur 1 zeigt eine Draufsicht auf einen Labortisch 1 gemäss einer ersten Ausführungsform mit einer Anzahl in einen Zwischenraum des Rahmens 2 eingebauter Tischplatten-Elemente 3. Dieser Labortisch 1 umfasst zumindest einen Rahmen 2 mit einem vorderen und einem diesem gegenüberliegenden hinteren Rahmenstück 4,5 sowie an diesem zumindest einen Rahmen 2 positionierbare Tischplatten-Elemente 3. Vorzugsweise sind die einander gegenüber angeordneten Rahmenstücke 4,5 parallel zu einander angeordnet und es wird ebenfalls bevorzugt, dass der Rahmen 2 zwei weitere Rahmenstücke 24,25 umfasst und als rechteckiger Rahmen ausgebildet ist. Vorzugsweise sind die Tischplatten-Elemente 3 des Labortischs 1 gemäss einer ersten Ausführungsform in zumindest einer horizontalen Dimension kleiner als der Rahmen 2. Ebenfalls bevorzugt sind Tischplatten-Elemente 3 des Labortischs 1 gemäss einer ersten Ausführungsform, die in allen horizontalen Dimensionen kleiner sind als der Rahmen 2. Zudem sind folgende Varianten der Anordnung der Tischplattenelemente in Bezug auf den diese Tischplattenelemente tragenden Rahmen je nach Bedarf bevorzugt:
- die Tischplattenelemente befinden sich auf einem höheren Niveau als die oberste Rahmenoberfläche;
- die Oberfläche der Tischplattenelemente ist bündig mit der obersten Rahmenoberfläche;
- die Tischplattenelemente befinden sich auf einem tieferen Niveau als die oberste Rahmenoberfläche.
Insbesondere die erstgenannte Variante ermöglicht das Bereitstellen eines Labortischs 1 mit einer völlig flachen Oberfläche.

Ausserdem kann für kleinere Laborgeräte vorgesehen werden, dass der Rahmen kleiner ist als das einzelne Tischplattenelement, das den Rahmen auf mindestens einer Seite oder auch auf allen Seiten überragen kann. Auch bei einfachen Laborgeräten können austauschbare Tischplattenelemente verwendet werden. Diese Tischplattenelemente können ganz spezielle Einrichtungen und/oder Aufbauten umfassen, so dass die Arbeitsfläche dieser einfachen Laborgeräte permanent oder auch nur temporär bestimmten Arbeitsabläufen zugeordnet werden kann.
Der Rahmen 2 umfasst zumindest eine am vorderen oder hinteren Rahmenstück 4,5 angeordnete Rastschiene 6,7 mit Rastöffnungen 8,9. Jede dieser Rastöffnungen 8,9 ist zum Einführen und zum gleitenden Führen eines Rastbolzens 10,11 eines Tischplatten-Elements 3 ausgebildet und angeordnet. Die Gleitrichtung des Rastbolzens ist vorzugsweise horizontal.

Die hier durchsichtig gezeichneten Tischplatten-Elemente 3 umfassen zumindest einen Rastbolzen 10,11, der zum Einführen und zum gleitenden Führen in eine(r) der Rastöffnungen 8,9 dieser Rastschienen 6,7 ausgebildet und angeordnet ist. Vorzugsweise ist zumindest ein Teil dieser Rastöffnungen 8,9 zum Festhalten eines entsprechenden Rastbolzens 10,11 eines Tischplatten-Elements 3 in einer vertikalen Richtung ausgebildet. Die hier abgebildeten Rastschienen 6,7 sind im Bereich der Rastöffnungen 8,9 seitlich offen ausgebildet. Die Rastöffnungen 8,9 der Rastschienen 6,7 sind in einem regelmässigen, modularen Abstand 12 angeordnet. Die Rastbolzen 10,11 von Tischplatten-Elementen 3 mit mindestens zwei vorderen oder hinteren Rastbolzen 10,11 sind bevorzugt im gleichen Abstand 12 oder einem Vielfachen dieses Abstandes 12 angeordnet.

Die Tischplatten-Elemente 3 können je nach Bedarf eine einheitliche oder unterschiedliche Breite 43 aufweisen. In jedem Fall gilt jedoch, dass die Tischplatten-Elemente 3 eine Breite 43 aufweisen, die im Rahmen der Fertigungsgenauigkeit zumindest annähernd dem regelmässigen Abstand 12 oder zumindest annähernd einem Vielfachen dieses Abstandes 12 entspricht. So sind in der Fig. 1 Tischplatten-Elemente 3 mit einer Breite 43 abgebildet, die (von links nach rechts betrachtet) annähernd dem Dreifachen, Sechsfachen (6 x 12), Einfachen, Einfachen, Dreifachen, Doppelten, Fünffachen (5 x 12), Einfachen und Doppelten des Abstandes 12 entsprechen. Um kleinere Fertigungstoleranzen auszugleichen und um ein beliebiges Ein- und Ausbauen der einzelnen Tischplatten-Elemente 3 zu ermöglichen, kann erlaubt sein, dass sich zwischen den eingebauten Tischplatten-Elementen 3 bzw. zwischen den weiteren Rahmenstücken 24,25 und den daran anschliessenden Tischplatten-Elementen 3 schmale Fugen 44 mit einer Weite von wenigen mm bilden. Auf diese Weise kann ein Labortisch 1 bereitgestellt werden, dessen Arbeitsfläche dem jeweiligen Bedarf entsprechend aus unterschiedlichsten Modulen von Tischplatten-Elementen 3 aufgebaut ist.

So ist beispielsweise in der Fig. 1 ersichtlich, dass das dritte Tischplatten-Element 3 von rechts mit einer Reihe von fünf hinteren Rastbolzen 11 und mit einer Reihe von fünf vorderen Rastbolzen 10 ausgerüstet ist, wobei in jeder dieser beiden Reihen die Rastbolzen 10,11 viermal im gleichen Anstand 12 angeordnet sind. Des Weiteren ist aus dieser Fig. 1 ersichtlich, dass beim zweiten Tischplatten-Element 3 von rechts, das nur mit je einem vorderen und hinteren Rastbolzen 10,11 ausgerüstet ist, die Bolzenachse 26 mit der Plattenachse 27 identisch ist. Demgegenüber ist beim ersten Tischplatten-Element 3 von links, das mit je drei vorderen und hinteren Rastbolzen 10,11 ausgerüstet ist, nur die mittlere Bolzenachse 26 mit der Plattenachse 27 identisch.

Die Figur 2 zeigt eine Draufsicht auf einen Labortisch 1 gemäss einer zweiten Ausführungsform mit einer Anzahl teilweise in einen Zwischenraum des Rahmens 2 eingebauten und teilweise den Rahmen 2 überragenden Tischplatten-Elementen 3. Tatsächlich befinden sich bei dieser zweiten Ausführungsform nicht alle Rahmenstücke 4,5 und 24,25 auf der gleichen Höhe wie bei der ersten Ausführungsform: Das vordere Rahmenstück 4 ist etwas abgesenkt und wird von den eingebauten Tischplatten-Elementen 3 teilweise überragt. Somit ist hier das Rahmenstück 4 in Bezug auf das gegenüber angeordnete Rahmenstück 5 tiefer liegend angeordnet.

Eines der hier durchsichtig gezeichneten Tischplatten-Elemente 3 ist aus dem Rahmen herausgenommen und weist trotz seiner Grösse, die Platz bieten würde für eine Reihe von je fünf hinteren Rastbolzen 11 und für eine Reihe von fünf vorderen Rastbolzen 10, nur je zwei vordere und hintere Rastbolzen 10,11 auf. Diese vier Rastbolzen 10,11 sind jedoch so angeordnet, dass sie dem modularen Raster der Rastschienen 6,7 mit dem gleichmässigen Abstand 12 entsprechen. Die vier Rastbolzen 10,11 sind an den Punkten angeordnet, die möglichst weit voneinander entfernt sind; damit wird eine möglichst grosse Stabilität dieses Tischplatten-Elements 3 erreicht.

Die Tischplatten-Elemente 3 können je nach Bedarf eine einheitliche oder unterschiedliche Breite 43 aufweisen. In jedem Fall gilt jedoch, dass die Tischplatten-Elemente 3 eine Breite 43 aufweisen, die im Rahmen der Fertigungsgenauigkeit zumindest annähernd dem regelmässigen Abstand 12 oder zumindest annähernd einem Vielfachen dieses Abstandes 12 entspricht. So sind in der Fig. 2 Tischplatten-Elemente 3 mit einer Breite 43 abgebildet, die (von links nach rechts betrachtet) annähernd dem Dreifachen, Sechsfachen (6 x 12), Fünffachen, Doppelten (2 x 12), Fünffachen, Einfachen (12) und Doppelten des Abstandes 12 entsprechen. Um kleinere Fertigungstoleranzen auszugleichen und um ein beliebiges Ein- und Ausbauen der einzelnen Tischplatten-Elemente 3 zu ermöglichen, kann erlaubt sein, dass sich zwischen den eingebauten Tischplatten-Elementen 3 bzw. zwischen den weiteren Rahmenstücken 24,25 und den daran anschliessenden Tischplatten-Elementen 3 schmale Fugen 44 mit einer Weite von wenigen mm bilden. Auf diese Weise kann ein Labortisch 1 bereitgestellt werden, dessen Arbeitsfläche dem jeweiligen Bedarf entsprechend aus unterschiedlichsten Modulen von Tischplatten-Elementen 3 aufgebaut ist.

In dieser Figur 2 wurde alle Tischplatten-Elemente 3 nach diesem Prinzip der möglichst grossen Stabilität mit mindestens zwei, bevorzugt aber mit vier Rastbolzen 10,11 ausgerüstet. Bei dem hier gezeigten Labortisch 1 umfasst der Rahmen 2 eine Anschlagfläche 19, die an dem vorderen der einander gegenüber liegenden Rahmenstücke 4,5 angeordnet ist. Diese Anschlagfläche 19 ist hier als ein an dem Rahmenstück 4 vertikal hochstehender Steg ausgebildet.

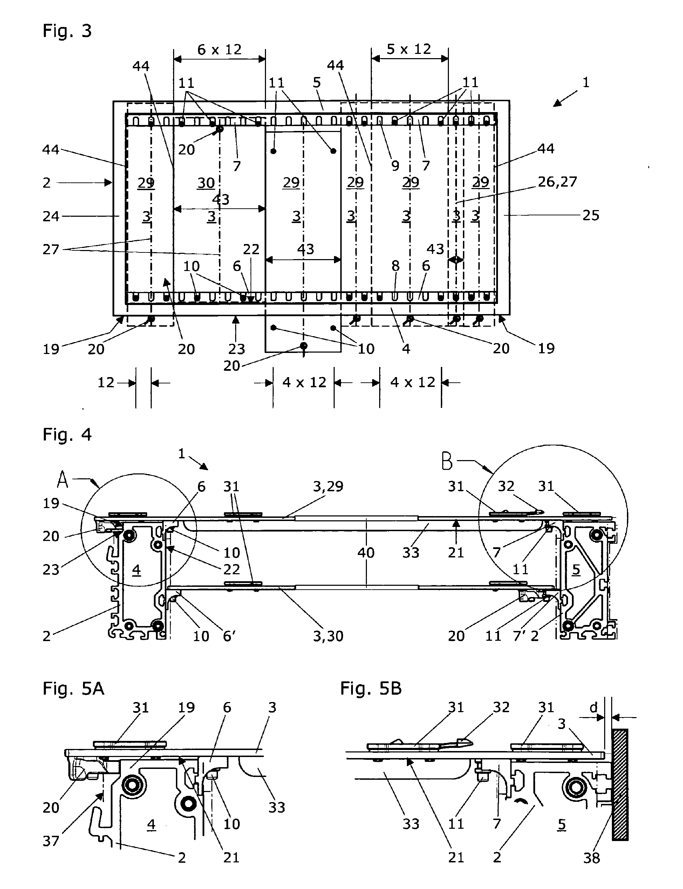

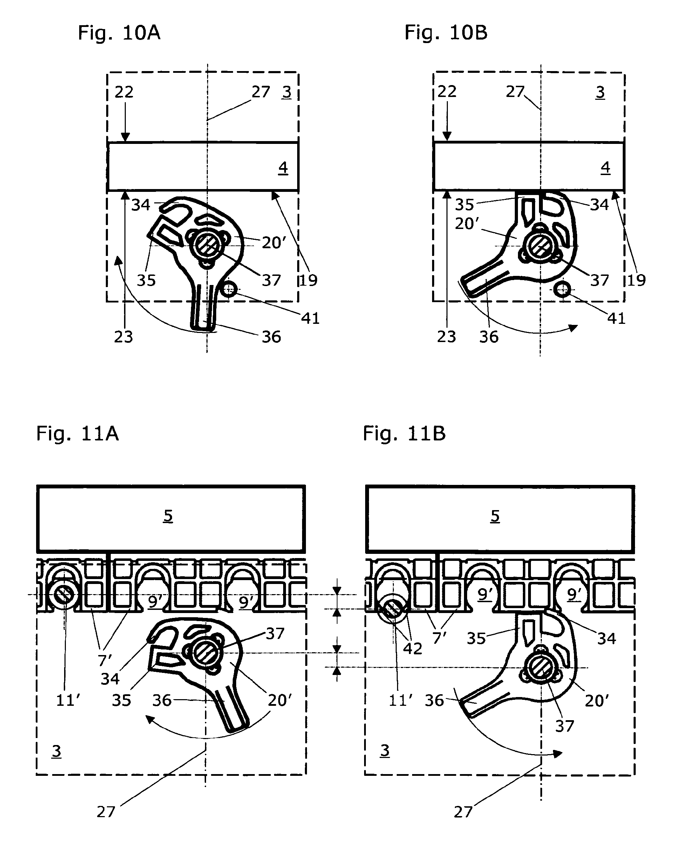

Alle in der Fig. 2 gezeigten Tischplatten-Elemente 3 umfassen zudem einen, an einer Unterseite 21 der Tischplatten-Elemente 3 angeordneten Feststellmechanismus 20. Dieser Feststellmechanismus 20 ist beim Einbauen der Tischplatten-Elemente 3 um eine Achse 37 gegen die Anschlagfläche 19 schwenkbar ausgebildet (vgl. Fig. 5A). In dem in Fig. 2 gezeigten Beispiel ist der Feststellmechanismus 20 der Tischplatten-Elemente 3 als Spannhebel 20' ausgebildet (vgl. Fig. 10). Dieser Spannhebel 20' umfasst einen Handgriff 36, einen Feststellblock 35 und einen Spannbügel 34. Der Feststellblock 35 definiert eine Verschluss-Lage des Spannhebels 20'. Der Spannbügel 34 beaufschlägt in dieser Verschluss-Lage des Spannhebels 20' die Anschlagfläche 19 federnd und übt eine Federkraft auf die Anschlagfläche 19 aus (vgl. Fig. 10B).

Die Figur 3 zeigt eine Unteransicht eines Labortischs 1 gemäss einer dritten Ausführungsform mit einem in einen Zwischenraum des Rahmens 2 eingebauten Tischplatten-Element 3 einer unteren Plattenebene 30 und mit einer Anzahl den Rahmen 2 beidseits zumindest teilweise überragender Tischplatten-Elemente 3 einer oberen Plattenebene 29. In dieser hier gezeigten Ausführungsform stehen die eingebauten Tischplatten-Elemente 3 der oberen Plattenebene 29 über das vordere Rahmenstück 4 und die Anschlagfläche 19 am vorderen Rahmenstück 4 hinaus (vgl. erstes Tischplatten-Element 3 von links und die vier Tischplatten-Elemente 3 von rechts).

Dieser Labortisch 1 umfasst zumindest einen Rahmen 2 mit einem vorderen und einem diesem gegenüberliegenden hinteren Rahmenstück 4,5 sowie an diesem zumindest einen Rahmen 2 positionierbare Tischplatten-Elemente 3. Der Rahmen 2 umfasst zumindest eine am vorderen oder hinteren Rahmenstück 4,5 angeordnete Rastschiene 6,6',7,7' mit Rastöffnungen 8,8',9,9'. Dabei ist jede dieser Rastöffnungen 8,8',9,9' zum Einführen und zum gleitenden Führen eines Rastbolzens 10,11 eines Tischplatten-Elements 3 ausgebildet und angeordnet. Die Tischplatten-Elemente 3 dieses Labortischs 1 umfassen zumindest einen Rastbolzen 10,11, der zum Einführen und zum gleitenden Führen in eine(r) der Rastöffnungen 8,8',9,9' dieser Rastschienen 6,6',7,7' ausgebildet und angeordnet ist. Die Gleitrichtung des Rastbolzens 10,11 ist vorzugsweise horizontal.

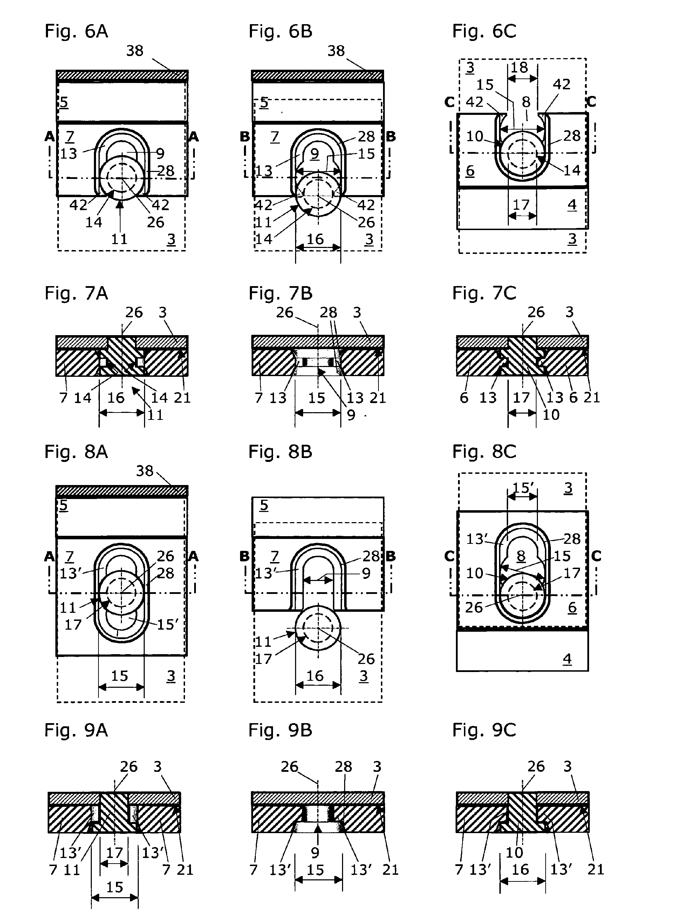

Bei diesem Labortisch 1 sind die Tischplatten-Elemente 3 der oberen Plattenebene 29 nur in einer horizontalen Dimension kleiner als der Rahmen 2. Dagegen sind die Tischplatten-Elemente 3 der unteren Plattenebene 30 in beiden horizontalen Dimensionen kleiner als der Rahmen 2. Zumindest ein Teil, vorzugsweise aber alle diese Rastöffnungen 8,8',9,9' sind zum Festhalten eines Rastbolzens 10,11 eines Tischplatten-Elements 3 in einer vertikalen Richtung ausgebildet. Die Rastschienen 6,6',7,7' sind hier im Bereich der Rastöffnungen 8,8',9,9' seitlich offen ausgebildet (vgl. auch Fig. 6). Abweichend von dieser Darstellung können die Rastschienen 6,6',7,7' im Bereich der Rastöffnungen 8,8',9,9' seitlich geschlossen ausgebildet sein (vgl. Fig. 8A und 8C).

Die Rastöffnungen 8,9 der Rastschienen 6,7 sind bevorzugt in einem regelmässigen Abstand 12, in einem sogenannten Raster angeordnet. Die Rastbolzen 10,11 von Tischplatten-Elementen 3 mit mindestens zwei vorderen oder hinteren Rastbolzen 10,11 sind bevorzugt im gleichen modularen Abstand 12 oder einem Vielfachen dieses Abstandes 12 angeordnet. Je nach der vorgesehenen Belastung eines Tischplatten-Elements 3 können die Rastbolzen 10,11 (wie in Fig. 3 gezeigt) in Position und Anzahl willkürlich und trotzdem dem durch den Abstand 12 definierten modularen Rastermass folgend angeordnet sein. Die Rastschienen 6,6',7,7' sind vorzugsweise so an den einander gegenüber liegenden Rahmenstücken 4,5 befestigt, dass die Rastöffnungen 8,8',9,9' der beiden Rastschienen 6,6',7,7' gegen einander gerichtet sind.

Die Tischplatten-Elemente 3 können je nach Bedarf eine einheitliche oder unterschiedliche Breite 43 aufweisen. In jedem Fall gilt jedoch, dass die Tischplatten-Elemente 3 eine Breite 43 aufweisen, die im Rahmen der Fertigungsgenauigkeit zumindest annähernd dem regelmässigen Abstand 12 oder zumindest annähernd einem Vielfachen dieses Abstandes 12 entspricht. So sind in der Fig. 3 Tischplatten-Elemente 3 mit einer Breite 43 abgebildet, die (von links nach rechts betrachtet) annähernd dem Dreifachen, Sechsfachen (6 x 12), Fünffachen, Doppelten, Fünffachen (5 x 12), Einfachen und Doppelten des Abstandes 12 entsprechen. Um kleinere Fertigungstoleranzen auszugleichen und um ein beliebiges Ein- und Ausbauen der einzelnen Tischplatten-Elemente 3 zu ermöglichen, kann erlaubt sein, dass sich zwischen den eingebauten Tischplatten-Elementen 3 bzw. zwischen den weiteren Rahmenstücken 24,25 und den daran anschliessenden Tischplatten-Elementen 3 schmale Fugen 44 mit einer Weite von wenigen mm bilden. Auf diese Weise kann ein Labortisch 1 bereitgestellt werden, dessen Arbeitsfläche dem jeweiligen Bedarf entsprechend aus unterschiedlichsten Modulen von Tischplatten-Elementen 3 aufgebaut ist.

Der Labortisch 1 gemäss der dritten Ausführungsform umfasst bevorzugt Tischplatten-Elemente 3 in einer oberen Plattenebene 29 und in einer unteren Plattenebene 30, die im eingebauten Zustand im Wesentlichen horizontal ausgerichtet sind (vgl. Fig. 3 und 4). Zudem sind die einander gegenüber angeordneten Rahmenstücke 4,5 vorzugsweise parallel zu einander angeordnet, und der Rahmen 2 umfasst vorzugsweise zwei weitere Rahmenstücke 24,25 und ist als rechteckiger Rahmen ausgebildet. Der Labortisch 1 gemäss der dritten Ausführungsform kann auch Tischplatten-Elemente 3 nur in einer oberen Plattenebene 29 oder nur in einer unteren Plattenebene 30 umfassen, die im eingebauten Zustand im Wesentlichen horizontal ausgerichtet sind. Bevorzugt ist jeweils an einer Position des Labortischs 1 ein Tischplatten-Element 3 entweder in der oberen Plattenebene 29 oder in der unteren Plattenebene 30 angeordnet.

Alle bisher gezeigten Tischplatten-Elemente 3 umfassen zudem zumindest einen, vorzugsweise an einer Unterseite 21 der Tischplatten-Elemente 3 angeordneten Feststellmechanismus 20. Dieser Feststellmechanismus 20 ist beim Einbauen der Tischplatten-Elemente 3 um eine Achse 37 gegen die Anschlagfläche 19 schwenkbar ausgebildet. In dem in Fig. 3 gezeigten Beispiel ist der Feststellmechanismus 20 der Tischplatten-Elemente 3 als Spannhebel 20' ausgebildet (vgl. Fig. 10). Dieser Spannhebel 20' umfasst einen Handgriff 36, einen Feststellblock 35 und einen Spannbügel 34. Der Feststellblock 35 definiert eine Verschluss-Lage des Spannhebels 20'.

Bei den Tischplatten-Elementen 3 der oberen Plattenebene 29 ist der Spannhebel 20' bevorzugt im vorderen (einer Bedienungsperson nahen) Bereich des Labortischs 1 angeordnet, so dass der Spannhebel 20' von der Bedienungsperson einfach von Hand bewegt werden kann. Der Spannbügel 34 beaufschlägt in der Verschluss-Lage des Spannhebels 20' die Anschlagfläche 19 federnd und übt eine Federkraft auf die Anschlagfläche 19 aus (vgl. Fig. 10B).

Bei den Tischplatten-Elementen 3 der unteren Plattenebene 30 ist der Spannhebel 20' bevorzugt im hinteren (einer Bedienungsperson fernen) Bereich des Labortischs 1 angeordnet. Trotzdem (oder gerade deswegen) kann der Spannhebel 20' von der Bedienungsperson einfach von Hand bewegt werden. Der Spannbügel 34 beaufschlägt in der Verschluss-Lage des Spannhebels 20' die Rastschiene 7' federnd und übt eine Federkraft auf die Rastschiene 7' aus (vgl. Fig. 11B). Abweichend von dieser Darstellung kann bei den Tischplatten-Elementen 3 der unteren Plattenebene 30 der Spannhebel 20' im vorderen (einer Bedienungsperson nahen) Bereich des Labortischs 1 angeordnet sein. Bevorzugt werden nur wenige Tischplatten-Elemente 3 in der unteren Plattenebene 30 angeordnet, damit möglichst wenige Spannhebel 20' zu einer Verformung des Rahmens 2 beitragen können.

In allen bisher gezeigten Ausführungsformen des erfindungsgemässen Labortischs 1 sind die Rastbolzen 10,11 an der Unterseite 21 der Tischplatten-Elemente 3 angeordnet. Abweichend von dieser Darstellung könnten die Rastbolzen 10,11 auch an der Oberseite der Tischplatten-Elemente 3 angeordnet sein, so dass die Tischplatten-Elemente 3 unten an den Rastschienen 6,6',7,7' befestigt werden könnten (nicht bevorzugt und nicht gezeigt).

In allen bisher gezeigten Ausführungsformen des erfindungsgemässen Labortischs 1 sind die Rastschienen 6,6',7,7' so an den einander gegenüber liegenden Rahmenstücken 4,5 befestigt, dass die Rastöffnungen 8,8',9,9' der beiden Rastschienen 6,6',7,7' gegen einander gerichtet sind. Die Rastschienen 6,6',7,7' sind somit vorzugsweise an der Tisch-Innenseite des Rahmens angeordnet.

Abweichend von diesen Darstellungen in den Figuren 1 bis 3 können die Rastschienen 6,6',7,7' so an den einander gegenüber liegenden Rahmenstücken 4,5 befestigt sein, dass die Rastöffnungen 8,8',9,9' der beiden Rastschienen 6,6',7,7' auseinander gerichtet sind. Die Rastschienen 6,6',7,7' sind dann vorzugsweise an der Tisch-Aussenseite des Rahmens angeordnet (nicht gezeigt).

Ebenfalls abweichend von diesen Darstellungen in den Figuren 1 bis 3 können die Rastschienen 6,6',7,7' so an den einander gegenüber liegenden Rahmenstücken 4,5 befestigt sein, dass die Rastöffnungen 8,8',9,9' der beiden Rastschienen 6,6',7,7' gleichgerichtet sind. Die Rastschienen 6,6',7,7' sind dann vorzugsweise entweder an der Tisch-Innenseite oder an der Tisch-Aussenseite des Rahmens angeordnet (nicht gezeigt).

Die Figur 4 zeigt einen vertikalen Querschnitt durch das vordere Rahmenstück 4 (mit A markiert) und durch das hintere Rahmenstück 5 (mit B markiert) des Rahmens 2 des erfindungsgemässen Labortischs 1 mit einem in der unteren Plattenebene 30 und einem in der oberen Plattenebene 29 eingebauten Tischplatten-Element 3 (vgl. auch Fig. 3). Bevorzugt sind die Tischplatten-Elemente 3 in der oberen Plattenebene 29 und/oder in der unteren Plattenebene 30 im eingebauten Zustand im Wesentlichen horizontal ausgerichtet.

In der Figur 4 sind zudem Ausschnitte 40 gezeigt. Ein solcher Ausschnitt 40 ist in einem an dieser Position des Labortischs 1 angeordneten Tischplatten-Element 3, also entweder in der oberen Plattenebene 29 oder in der unteren Plattenebene 30 angebracht. Durch diesen Ausschnitt 40 können bauhöhere Komponenten auf eine untere Nebenarbeitsebene in Laboranlagen eingebaut werden, so dass der Bewegungsbereich der in diesen Laboranlagen vorhandenen Roboter wesentlich weniger beeinträchtigt wird. Alternativ dazu oder zusätzlich ermöglichen derartige Ausschnitte 40 in Tischplatten-Elementen 3 der Arbeitsfläche von Laborgeräten oder Laboranlagen das Durchreichen bzw. den Transfer von Behältern (z.B. zum Beladen/Entladen einer Zentrifuge) durch die Arbeitsfläche hindurch.

Wie im Kreis A eingezeichnet, umfasst der Rahmen 2 eine Anschlagfläche 19, die hier an dem vorderen der einander gegenüber liegenden Rahmenstücke 4 angeordnet ist. Diese Anschlagfläche 19 ist hier eine Aussenfläche des Rahmenstücks 4 oder vorzugsweise eine Einfräsung am Rahmenstück 4. Ganz allgemein kann ein Rahmen 2 eine Anschlagfläche 19 umfassen, die an dem vorderen oder hinteren der einander gegenüber liegenden Rahmenstücke 4,5 angeordnet ist. Zudem kann diese Anschlagfläche 19 von einem Fachmann aus der Gruppe von Anschlagflächen 19 ausgewählt werden, welche eine Aussenfläche eines Rahmenstücks 4,5; eine Einfräsung an einem Rahmenstücks 4,5; einen an einem Rahmenstück 4,5 vertikal hochstehenden Steg (vgl. Fig. 2), einen über ein Rahmenstück 4,5 horizontal hinaus stehenden Steg sowie beliebige Kombinationen dieser Anschlagflächen 19 umfasst.

In diesem Ausführungsbeispiel (vgl. auch Fig. 3) stehen die eingebauten Tischplatten-Elemente 3 der oberen Plattenebene 29 horizontal über das vordere Rahmenstück 4 und die Anschlagfläche 19 am vorderen Rahmenstück 4 hinaus und die eingebauten Tischplatten-Elemente 3 der unteren Plattenebene 30 sind seitlich an die einander gegenüber angeordneten Rahmenstücke 4,5 angenähert.
Die Tischplatten-Elemente 3 umfassen zumindest einen, an einer Unterseite 21 der Tischplatten-Elemente 3 angeordneten Feststellmechanismus 20, der beim Einbauen der Tischplatten-Elemente 3 um eine Achse 37 gegen die Anschlagfläche 19 oder gegen eine der Rastschienen 6',7' schwenkbar ausgebildet ist.

Die Figur 5 zeigt Detailschnitte zu der Figur 4:

In Fig. 5A ist in einem Vertikalschnitt durch den oberen Teil des Rahmens 2, d.h. des vorderen Rahmenstücks 4 mit Rastschiene 6, eine Anschlagfläche 19 und ein Tischplatten-Element 3 mit Spannhebel 20' gezeigt. Dieser Spannhebel 20' wird hier als Feststellmechanismus 20 verwendet, der an einer Unterseite 21 des Tischplatten-Elements 3 angeordnet ist. Zum Feststellen des eingebauten Tischplatten-Elements 3 wurde dieser Spannhebel 20' um eine Achse 37 gegen die Anschlagfläche 19 geschwenkt. Dadurch beaufschlägt ein Spannbügel 34 in einer durch einen Feststellblock 35 des Spannhebels 20' definierten Verschluss-Lage federnd die Anschlagfläche 19 und übt eine Federkraft auf die Anschlagfläche 19 aus (vgl. Fig. 10B). Durch das Feststellen wird der Rastbolzen 10 in seine Endposition in der Rastschiene 6 gezogen (vgl. Fig. 6C); dabei wird das Rahmenstück 4 mit der Anschlagfläche 19 zwischen der Kombination Rastschiene 6 / Rastbolzen 10 und dem Spannbügel 34 des Spannhebels 20' eingeklemmt. Dadurch ergibt sich eine versperrte Fixierung der Rastbolzen 10,11. Die Gleitrichtung des Rastbolzens 10,11 ist vorzugsweise horizontal.

In Fig. 5B ist ein Vertikalschnitt durch den oberen Teil des Rahmens 2, d.h. des hinteren Rahmenstücks 5 mit Rastschiene 7 und Rastbolzen 11 gezeigt. Durch das Feststellen des Tischplatten-Elements 3 wird der Rastbolzen 11 in seine Feststellposition in der Rastschiene 7 gezogen und dort gegenüber Bewegungen in der Vertikalen fixiert (vgl. Fig. 6B), indem die Halteportionen 42 der Rastschiene 7 in die Nut 14 der Rastbolzen 11 eingreifen. Durch das Verschieben des Tischplatten-Elements 3 durch das Feststellen entsteht eine Distanz d zwischen dem Hinterende des Tischplatten-Elements 3 und der Vorderkante einer bevorzugt angebrachten, vertikalen Rückwand 38.

An der Unterseite 21 des Tischplatten-Elements 3 sind vorzugsweise Verstärkungsleisten 33 vorgesehen, welche die Stabilität des Tischplatten-Elements 3 erhöhen und dazu beitragen, das Gewicht des Tischplatten-Elements 3 zu minimieren. An der Oberseite des Tischplatten-Elements 3 sind vorzugsweise Halteschienen 31 vorgesehen, welche dazu dienen, beliebige Objekte (z.B. sogenannte "Carrier" für Mikroplatten, Flüssigkeitsbehälter, sogenannte "Racks" für Probenröhrchen etc.), auf dem durch die Tischplatten-Elemente 3 definierten Arbeitstisch exakt zu positionieren. Vorzugsweise umfasst zumindest eine dieser Halteschienen 31, welche die Objekte in einer horizontalen X-Richtung definiert fixieren, einen Rastnocken 32, der diese Objekte auch in der dazu rechtwinklig verlaufenden, horizontalen Y-Richtung definiert fixiert.

Die Figur 6 zeigt Detailansichten auf eine Rastschiene / Rastbolzen - Kombination gemäss einer ersten Ausführungsvariante, die dadurch gekennzeichnet ist, dass die Rastschienen 6,6',7,7' im Bereich der Rastöffnungen 8,8',9,9' seitlich offen ausgebildet sind, dass in den Rastöffnungen 8,8',9,9' der Rastschienen 6,6',7,7' ein Haltesteg 13 angeordnet ist, und dass die Rastbolzen 10,11 einen kreisförmigen Querschnitt aufweisen und eine umlaufende Nut 14 umfassen, deren Breite der Höhe eines ersten Haltestegs 13 in den Rastöffnungen 8,8',9,9' der Rastschienen 6,6',7,7' angepasst ist.

Abweichend von dieser Definition kann der Rastbolzen 10,11 auch eine Form aufweisen, die von der bevorzugten zylindrischen Form abweicht. So kann der Rastbolzen beispielsweise einen ovalen, elliptischen oder polygonalen Querschnitt (mit oder ohne abgerundete Ecken) aufweisen. Zudem muss die Nut 14 nicht umlaufend ausgebildet sein. Die Nut 14 kann sich auch nur auf denjenigen Seiten der Rastbolzen 10,11 befinden, die parallel zur Führungsrichtung (Y-Richtung) der sich ebenfalls nur in Y-Richtung erstreckenden Haltestege 13 verlaufen.

Als weitere alternative Ausführung der Rastbolzen 10,11 kann vorgesehen sein, dass die Rastbolzen 10,11 einen durchgehend gleichen Querschnitt aufweisen (nicht gezeigt) und deshalb als "Stift" bezeichnet werden können. Derartige "Stif-te" stellen jedoch keinen Halt der Tischplatten-Elemente 3 in der vertikalen Z-Richtung bereit, weil sie auch allenfalls vorhandene erste oder zweite Haltestege 13,13' nicht untergreifen. Es kann aber für die Stabilität der Tischplatte durchaus genügen, auf der Seite eines Tischplatten-Elements 3, auf der der Spannmechanismus 20 angeordnet ist, lediglich einen Stift und keinen Rastbolzen 10,11 vorzusehen; in einem solchen Fall wären dann nur auf der dem Feststellmechanismus 20 gegenüber liegenden Seite des Tischplatten-Elements 3 ein Rastbolzen 10,11 vorzusehen, weil auf einer Seite das Festklemmen mit dem Feststellmechanismus 20 bereits eine genügende Sicherung für die Tischplatten-Elemente 3 bewirken kann. Dies ist vor allem dann der Fall, wenn von diesen Tischplatten-Elementen 3 keine Gegenstände (z.B. Pipettenspitzen oder Mikroplatten) gegen den Widerstand eines auf diesen Tischplatten-Elementen 3 angeordneten Haltemechanismus oder gegen sonst einen Widerstand aufgenommen werden müssen. Werden nur "Stifte" als Rastbolzen 10,11 eingesetzt, so kann auf die Anordnung von Haltestegen 13,13' verzichtet werden; es kann aber (zur Verbesserung der Haftung der Tischplatten-Elemente 3 am Rahmen 2) vorgesehen sein, auf beiden Seiten des Tischplatten-Elements 3 je einen Feststellmechanismus 20 anzuordnen. Wie gezeigt ist je nach Bedarf und den gegebenen Bedingungen das Vorsehen einer beliebigen Kombination und Anzahl von Rastbolzen 10,11 und/oder "Stiften" sowie von Feststellmechanismen 20 möglich.

In Fig. 6A ist der Rastbolzen 11 beim Einsenken in die hintere obere Rastschiene 7 während des Einbaus des Tischplatten-Elements 3 gezeigt. Das Tischplatten-Element 3 ragt dabei vorzugsweise über das hintere Rahmenstück 5 und berührt bevorzugterweise die Vorderseite einer Rückwand 38. Dieser Rastbolzen 11 (mit der Bolzenachse 26) taucht dabei in eine Aussparung 15 in der Rastöffnung 9 ein, wobei der Durchmesser der Aussparung 15 etwas grösser ist als der Grösste Querschnitt 16 des Rastbolzens 11. Einlaufschrägen an beiden Flanken der Rastöffnung 9 erleichtern das Zentrieren und damit das Einführen des Rastbolzens 11 in die Aussparung 15. Die Buchstaben A-A bezeichnen die Schnittlinie der Darstellung in Fig. 7A. Die Halteportionen 42 des ersten Haltestegs 13 sind hier gut sichtbar und werden vom Rastbolzen 11 nicht verdeckt.

In Fig. 6B ist der Rastbolzen 11 in einer Fixierposition in der hinteren oberen Rastschiene 7 gezeigt, wobei der Rastbolzen 11 (mit der Bolzenachse 26) in dieser Fixierposition in horizontaler X-Richtung so festgehalten wird, dass er in der Z-Richtung fixiert ist. Dies wird vorzugsweise dadurch bewerkstelligt, dass die Haltestege 13 in den Rastöffnungen 9 der Rastschiene 7 einseitig in horizontaler Richtung offen ausgebildet sind, und dass die Haltestege 13 in den Rastöffnungen 9 der Rastschienen 7 zum vertikalen Festhalten und zum horizontalen Führen der Rastbolzen 11 jeweils an ihrer offenen Seite eine Verengung 18 aufweisen, die weiter ist als ein reduzierter Querschnitt 17 der Rastbolzen 11 im Bereich der Nut 14, die aber enger ist als der grösste Querschnitt 16 der Rastbolzen 11. Durch die an der Verengung 18 angeordneten Halteportionen 42 (hier gestrichelt gezeichnet, weil sie vom Rastbolzen 11 grösstenteils verdeckt sind) der Haltestege 13, welche in die Nut 14 des Rastbolzens 11 eingreifen, wird dieser Rastbolzen 11 an einer Bewegung in Z-Richtung gehindert. Die Buchstaben B-B bezeichnen die Schnittlinie der Darstellung in Fig. 7B. Gleichzeitig wird der Rastbolzen 11 in horizontaler Richtung durch die beiden, um die Verengung 18 (vgl. Fig. 6C) beabstandeten Halteportionen 42 geführt. Dabei berühren die beiden Halteportionen 42 praktisch den Grund der Nut 14 im Rastbolzen 11 und führen diesen in horizontaler Richtung, so dass dieser Rastbolzen 11 in der Längsrichtung des hinteren Rahmenstücks 5 nicht ausweichen kann.

In Fig. 6C ist der Rastbolzen 10 in einer Endposition zeigt, in welcher er in der vorderen oberen Rastschiene 6 versperrt festgehalten wird. In dieser Position des Rastbolzens 10 greift der Haltesteg 13 in der Rastöffnung 8 der Rastschiene 6 in die Nut 14 im Rastbolzen 11 ein und hält diesen in vertikaler Richtung und parallel zur Längsrichtung des vorderen Rahmenstücks 4 fest. Die Rastöffnungen 8 der Rastschiene 6 weisen zum vertikalen Festhalten und zum horizontalen Führen der Rastbolzen 11 jeweils an ihrer offenen Seite eine Verengung 18 auf. Falls der Rastbolzen 10 in Abweichung von den Darstellungen in Fig.6 3 z.B. einen rechteckigen Querschnitt aufweist und nur auf den beiden Seiten eine Nut 14 umfasst, die parallel zur Führungsrichtung (Y-Richtung) von sich ebenfalls nur in Y-Richtung erstreckenden Haltestege 13 verlaufen, so steht der Rastbolzen 11 in seiner Endposition mit einer Seite an der Rastschiene 6 an, die keine Nut 14 aufweist. Entsprechend könnte an dieser Stelle der Rastöffnung 8 die Rastschiene 6 keinen Haltesteg 13 aufweisen. Die Buchstaben C-C bezeichnen die Schnittlinie der Darstellung in Fig. 7C. Die Halteportionen 42 des ersten Haltestegs 13 sind hier gut sichtbar und werden vom Rastbolzen 11 nicht verdeckt.

Die Figur 7 zeigt Detailschnitte durch die Rastschiene / Rastbolzen - Kombination gemäss der ersten Ausführungsvariante von Fig. 6. Wie gezeigt ist der Rastbolzen 11 bevorzugt als zylindrisch ausgebildet, dies erlaubt eine kostengünstigere Fertigung. Der Rastbolzen 11 weist an seinem Hinterende bevorzugt eine zylinderförmige Verengung auf mit der er in einem entsprechend dimensionierten Loch des Tischplatten-Elements 3 befestigt ist. Bevorzugte Befestigungen der Rastbolzen 10,11 in den Tischplatten-Elemente 3 umfassen beispielsweise die Verwendung eines Press-Sitzes und/oder von Klebemitteln.

In Fig. 7A ist der in der Aussparung 15 der Rastschiene 7 platzierte Rastbolzen 11 (mit der Bolzenachse 26) während des Einbaus des Tischplatten-Elements 3 gezeigt. Der grösste Querschnitt 16 dieses Rastbolzens 11 ist selbstverständlich kleiner als der Durchmesser der Aussparung 15, welche frei ist von Haltestegen 13, die in die Nut 14 des Rastbolzens 11 eingreifen könnten. Die Buchstaben A-A bezeichnen die Schnittlinie der Darstellung in Fig. 9A.

In Fig. 7B ist die Rastöffnung 9 hinter dem Rastbolzen 11 gezeigt. Hier wird klar, dass die Aussparung 15 keine Haltestege 13 aufweist. Haltestege 13 sind hier deshalb nur in der Ansicht, aber nicht angeschnitten gezeigt. Die Rastschiene 7 weist vorzugsweise Einlaufschrägen 28 auf, welche das korrekte Positionieren des Rastbolzens 11 in der Rastöffnung 9 der Rastschiene 7 erleichtern. Die Buchstaben B-B bezeichnen die Schnittlinie der Darstellung in Fig. 9B.

In Fig. 7C ist der Rastbolzen 10 in einer Endposition gezeigt, in welcher er in der vorderen oberen Rastschiene 6 versperrt festgehalten wird. Hier wird klar, dass die Haltestege 13 in die Nut 14 des Rastbolzens 10 eingreifen, dabei ist aber der reduzierte Querschnitt 17 des Rastbolzens 10 etwas kleiner als die Öffnung des Langlochs 15' zwischen den Haltestegen 13. Die Buchstaben C-C bezeichnen die Schnittlinie der Darstellung in Fig. 9C.

Die Figur 8 zeigt Detailansichten auf eine Rastschiene / Rastbolzen - Kombination gemäss einer zweiten und dritten Ausführungsvariante. Die zweite und dritte Ausführungsvarianten unterscheiden sich von der ersten Ausführungsvariante unter anderem auch dadurch, dass der erste Haltesteg 13 (gemäss der ersten Ausführungsvariante) relativ schmal ist und in eine Nut 14 an einem Rastbolzen 10,11 eingreift, der im Wesentlichen die Querschnitts-Form eines "liegenden H" hat. Der Rastbolzen 10,11 bei der zweiten und dritten Ausführungsvariante hat dagegen eine Querschnitts-Form, die im Wesentlichen einem "auf den Kopf gestellten T" entspricht.

Die zweite Ausführungsvariante ist dadurch gekennzeichnet, dass die Rastschienen 6,6',7,7' im Bereich der Rastöffnungen 8,8',9,9' seitlich geschlossen ausgebildet sind, dass in den Rastöffnungen 8,8',9,9' der Rastschienen 6,6',7,7' ein zweiter Haltesteg 13' angeordnet ist, und dass die Rastbolzen 10,11 einen kreisförmigen Querschnitt aufweisen und einen reduzierten Querschnitt 17 umfassen, dessen Breite der Höhe des zweiten Haltestegs 13' in den Rastöffnungen 8,8',9,9' der Rastschienen 6,6',7,7' angepasst ist. Wie abgebildet umfasst die zweite Ausführungsvariante der Rastschienen 6,6',7,7' eine Aussparung 15, die etwa in der Mitte der Rastöffnungen 8,8',9,9' angeordnet ist.

Die dritte Ausführungsvariante ist dadurch gekennzeichnet, dass die Rastschienen 6,6',7,7' im Bereich der Rastöffnungen 8,8',9,9' seitlich offen ausgebildet sind, dass in den Rastöffnungen 8,8',9,9' der Rastschienen 6,6',7,7' ein zweiter Haltesteg 13' angeordnet ist, und dass die Rastbolzen 10,11 einen kreisförmigen Querschnitt aufweisen und einen reduzierten Querschnitt 17 umfassen, dessen Breite der Höhe des zweiten Haltestegs 13' in den Rastöffnungen 8,8',9,9' der Rastschienen 6,6',7,7' angepasst ist. Wie abgebildet umfasst die dritte Ausführungsvariante der Rastschienen 6,6',7,7' keine Aussparung 15.

In Fig. 8A ist der Rastbolzen 11 (mit der Bolzenachse 26) beim Einsenken in die hintere obere Rastschiene 7 gemäss einer zweiten Ausführungsvariante während des Einbaus des Tischplatten-Elements 3 gezeigt. Das Tischplatten-Element 3 ragt dabei vorzugsweise über das hintere Rahmenstück 5 und berührt bevorzugterweise die Vorderseite einer Rückwand 38. Der grösste Querschnitt 16 dieses Rastbolzens 11 ist selbstverständlich kleiner als der Durchmesser der Aussparung 15, welche frei ist von Haltestegen 13', die in den reduzierten Querschnitt 17 des Rastbolzens 11 eingreifen könnten. Die Rastschiene 7 weist vorzugsweise Einlaufschrägen 28 auf, welche das korrekte Positionieren des Rastbolzens 11 in der Rastöffnung 9 der Rastschiene 7 der zweiten Ausführungsvariante erleichtern.

In Fig. 8B ist der Rastbolzen 11 (mit der Bolzenachse 26) beim Einschieben in die hintere obere Rastschiene 7 der dritten Ausführungsvariante während des Einbaus des Tischplatten-Elements 3 gezeigt.

In Fig. 8C ist der Rastbolzen 10 (mit der Bolzenachse 26) in einer Endposition gezeigt, in welcher er in der vorderen oberen Rastschiene 6 der zweiten Ausführungsvariante versperrt festgehalten wird.

Die Figur 9 zeigt Detailschnitte durch die Rastschiene / Rastbolzen - Wechselwirkung gemäss der zweiten und dritten Ausführungsvariante von Fig. 8.

In Fig. 9A ist der in der Aussparung 15 der Rastschiene 7 platzierte Rastbolzen 11 (mit der Bolzenachse 26) während des Einbaus des Tischplatten-Elements 3 gezeigt. Der grösste Querschnitt 16 dieses Rastbolzens 11 ist selbstverständlich kleiner als der Durchmesser der Aussparung 15, welche frei ist von Haltestegen 13', die in den reduzierten Querschnitt 17 des Rastbolzens 11 eingreifen könnten.

In Fig. 9B ist die Rastöffnung 9 hinter dem Rastbolzen 11 gezeigt. Die Rastschiene 7 weist vorzugsweise Einlaufschrägen 28 auf, welche das korrekte Positionieren des Rastbolzens 11 in der Rastöffnung 9 der Rastschiene 7 erleichtern.

In Fig. 9C ist der Rastbolzen 10 in einer Endposition gezeigt, in welcher er in der vorderen oberen Rastschiene 6 versperrt festgehalten wird. Hier wird klar, dass die Haltestege 13' in den reduzierten Querschnitt 17 des Rastbolzens 10 eingreifen, dabei ist aber der reduzierte Querschnitt 17 des Rastbolzens 10 etwas kleiner als die Öffnung des Langlochs 15' zwischen den Haltestegen 13'.

Die Figur 10 zeigt Detailansichten auf eine Spannhebel / Anschlagfläche - Wechselwirkung in der oberen Plattenebene 29 eines erfindungsgemässen Labortischs 1, der zumindest einen Rahmen 2 mit einem vorderen und einem diesem gegenüberliegenden hinteren Rahmenstück 4,5 sowie an diesem zumindest einen Rahmen 2 positionierbare Tischplatten-Elemente 3 umfasst. Der Rahmen 2 umfasst eine Anschlagfläche 19, die hier an dem vorderen der einander gegenüber liegenden Rahmenstücke 4 angeordnet ist und die hier als über das Rahmenstück 4 hinaus hochstehender Steg ausgebildet ist. Das Tischplatten-Element 3 umfasst zumindest einen, an seiner Unterseite 21 angeordneten Feststellmechanismus 20, der beim Einbauen des Tischplatten-Elements 3 um eine Achse 37 gegen die Anschlagfläche 19 schwenkbar ausgebildet ist. Dieser Feststellmechanismus 20 ist in der Fig. 10A als Spannhebel 20' in offener Position dargestellt.

Der zumindest eine Feststellmechanismus 20 des Tischplatten-Elements 3 ist hier als Spannhebel 20' ausgebildet. Dabei umfasst dieser Spannhebel 20' einen Handgriff 36, einen Feststellblock 35 und einen Spannbügel 34. Der Feststellblock 35 definiert eine Verschluss-Lage des Spannhebels 20' in einer verriegelten Position (vgl. Fig. 10B). Der Spannbügel 34 beaufschlägt in dieser Verschluss-Lage des Spannhebels 20' federnd die Anschlagfläche 19 und übt eine Federkraft auf die Anschlagfläche 19 aus.

Ein praktisches Detail ist zudem in der Figur 10 ersichtlich: Wenn sich der Spannhebel 20' nicht in der Verriegelungsposition befindet, so steht der Handgriff 36 vorzugsweise sichtbar über den vorderen Rand des Tischplatten-Elements 3 heraus (vgl. Fig. 10A). Nur wenn sich der Spannhebel 20' in der Verriegelungsposition befindet, so verschwindet der Handgriff 36 vorzugsweise unter dem vorderen Rand des Tischplatten-Elements 3 (vgl. Fig. 10B). Eine einfache Sichtkontrolle gibt in diesem Fall Auskunft darüber, ob alle Tischplatten-Elemente 3 vorschriftsmässig festgestellt und verriegelt sind. Diese Anordnung ist besonders bevorzugt für die Tischplatten-Elemente 3, die in einer oberen Plattenebene 29 angeordnet werden (vgl. Fig. 4 und 5).

Ein weiteres praktisches Detail betrifft den sogenannten Überdrehschutz 41 bei Tischplatten-Elementen 3 in der oberen Plattenebene 29: Ein Bolzen ist so an der Unterseite 21 des entsprechenden Tischplatten-Elements 3 angeordnet, dass der Handgriff 36 des Spannhebels 20' beim Lösen des Feststellmechanismus 20 eine Endposition einnimmt. Diese Endposition ist so gewählt, dass der Handgriff 36 nicht versehentlich zu weit geschwenkt werden kann und unter der Vorderkante des Tischplatten-Elements 3 verschwindet. Ein solches Verschwinden könnte fälschlicherweise als Anzeige missdeutet werden, dass sich der Spannhebel 20' in der Verriegelungsposition befindet.

Die Figur 11 zeigt Detailansichten auf eine Spannhebel / Rastschiene - Wechselwirkung in der unteren Plattenebene 30 eines erfindungsgemässen Labortischs 1, der zumindest einen Rahmen 2 mit einem vorderen und einem diesem gegenüberliegenden hinteren Rahmenstück 4,5 sowie an diesem zumindest einen Rahmen 2 positionierbare Tischplatten-Elemente 3 umfasst. Der Rahmen 2 umfasst Rastschienen 6,6',7,7' mit Rastöffnungen 8,8',9,9'. Gezeigt ist hier eine untere hintere Rastschiene 7', die an dem hinteren der einander gegenüber liegenden Rahmenstücke 5 angeordnet ist.

Das Tischplatten-Element 3 umfasst zumindest einen, an seiner Unterseite 21 angeordneten Feststellmechanismus 20, der beim Einbauen des Tischplatten-Elements 3 um eine Achse 37 gegen die Rastschiene 7' schwenkbar ausgebildet ist. Dieser Feststellmechanismus 20 ist in der Fig. 11A als Spannhebel 20' in offener Position dargestellt.

Der zumindest eine Feststellmechanismus 20 des Tischplatten-Elements 3 ist hier als Spannhebel 20' ausgebildet. Dabei umfasst dieser Spannhebel 20' einen Handgriff 36, einen Feststellblock 35 und einen Spannbügel 34. Der Feststellblock 35 definiert eine Verschluss-Lage des Spannhebels 20' in einer verriegelten Position (vgl. Fig. 11B). Der Spannbügel 34 beaufschlägt in dieser Verschluss-Lage des Spannhebels 20' federnd die Rastschiene 7' und übt eine Federkraft auf die Rastschiene 7' aus.

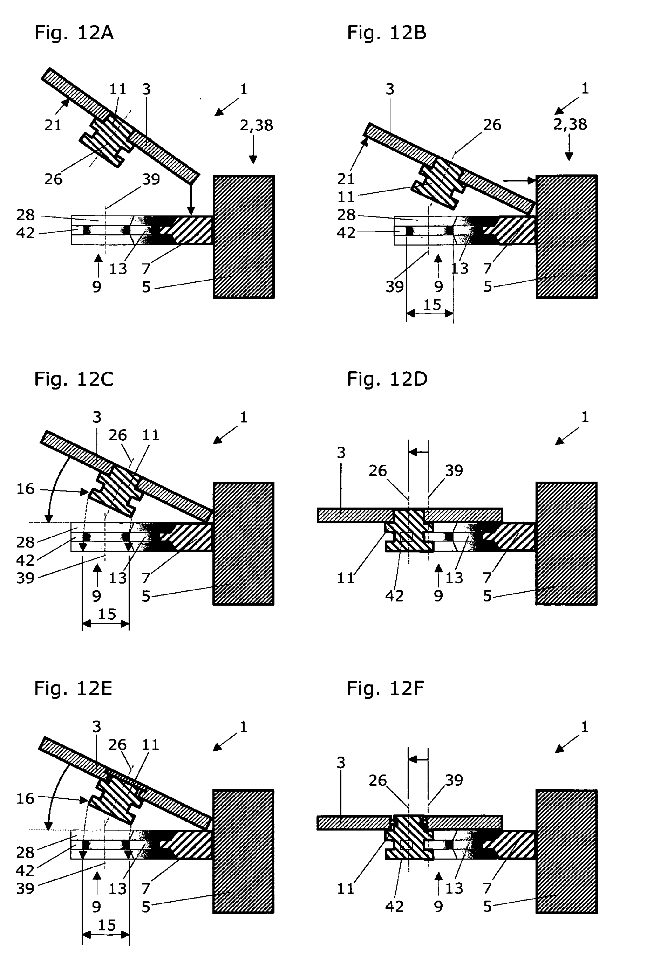

Die Figur 12 zeigt Detailschnitte durch eine hintere obere Rastschiene 7 beim Einbauen eines Tischplatten-Elements 3 in den Rahmen 2 eines erfindungsgemässen Labortischs 1. Das dabei durchgeführte Verfahren zum Bereitstellen eines Labortischs 1, der zumindest einen Rahmen 2 mit einem vorderen und einem diesem gegenüberliegenden hinteren Rahmenstück 4,5 sowie an diesem zumindest einen Rahmen 2 positionierbare Tischplatten-Elemente 3 umfasst, ist dadurch gekennzeichnet, dass der Rahmen 2 zumindest eine am vorderen oder hinteren Rahmenstück 4,5 angeordnete Rastschiene 6,6',7,7' mit Rastöffnungen 8,8',9,9' umfasst. Dabei ist jede dieser Rastöffnungen 8,8',9,9' zum Einführen und zum gleitenden Führen eines Rastbolzens 10,11 eines Tischplatten-Elements 3 ausgebildet und angeordnet. Bei diesem Verfahren werden die Tischplatten-Elemente 3 mit zumindest einem Rastbolzen 10,11 in diesen Rahmen 2 eingebaut, indem der zumindest eine Rastbolzen 10,11 in eine der Rastöffnungen 8,8',9,9' dieser Rastschienen 6,6',7,7' eingeführt und darin gleitend geführt wird. Die Gleitrichtung des Rastbolzens 10,11 ist vorzugsweise horizontal und rechtwinklig zur Längsrichtung des hinteren Rahmenstücks 5.

Fig. 12A zeigt den ersten Schritt des Einlegens eines Tischplatten-Elements 3 mit Beaufschlagen der hinteren Rastschiene 7, die als Leitmittel zum Erreichen der Schwenkposition verwendet wird. Gut sichtbar ist das schräg gehaltene Tischplatten-Element 3 mit dem daran nicht-verlierbar befestigten Rastbolzen 11 und dessen Bolzenachse 26. Ebenfalls ist die obere hintere Rastöffnung 9 (mit Aussparungsachse 39 und Einlaufschrägen 28) der oberen hinteren Rastschiene 7 zu sehen, die zur Aufnahme des Rastbolzens 11 bereit ist. Der hier gezeigte Rastbolzen 11 entspricht einer ersten Ausführungsform, in welcher er in einer entsprechenden Öffnung im Tischplatten-Element 3 mittels Press-Sitz unbeweglich fixiert ist.

Fig. 12B zeigt den zweiten Schritt des Einlegens des Tischplatten-Elements 3 mit zusätzlichem Beaufschlagen eines hinteren Anschlags, wobei dieser hintere Anschlag durch ein Stück des Rahmens 2 oder auch durch die Vorderseite einer Rückwand 38 bereitgestellt werden kann. Die Einzelteile sind die gleichen wie in Fig. 12A. Zudem ist hier die Aussparung 15 in der Rastöffnung 9 der Rastschiene 7 gut sichtbar. Diese Aussparung 15 weist einen Querschnitt auf, der grösser ist als ein grösster Querschnitt 16 der Rastbolzen 10,11 (vgl. Fig. 12C und 12E).

Fig. 12C zeigt den dritten Schritt des Einlegens des Tischplatten-Elements 3 mit Schwenken in die Horizontale bei gleichzeitigem Beaufschlagen der hinteren Rastschiene 7 und des hinteren Anschlags. Es ist gut zu sehen, dass die Bolzenachse 26 und die Aussparungsachse 39 durch dieses Schwenken eine identische Position annehmen, sobald der Rastbolzen 11 vollständig in die Aussparung 15 eintaucht. Zudem ist hier die Aussparung 15 markiert, in welche der Rastbolzen 11 gleich eintauchen wird. Diese Aussparung 15 weist einen Querschnitt auf, der grösser ist als der grösste Querschnitt 16 dieses Rastbolzens 11.

Fig. 12D zeigt den vierten Schritt des Einlegens des Tischplatten-Elements 3 mit horizontalem Verschieben und Feststellen des Tischplatten-Elements 3. Dieses horizontale Verschieben geschieht durch das Verriegeln des Feststellmechanismus 20, der viele Ausformungen haben kann und z.B. als Exzenter, Spannhebel, Schnapphebel, Schieber und dergleichen ausgebildet sein kann. Bevorzugt ist hingegen der in den Figuren 10 und 11 gezeigte Spannhebel 20'. Der hier gezeigte Rastbolzen 11 entspricht wie in den vorhergehenden Fig. 12B und 12C der ersten Ausführungsform, in welcher er in einer entsprechenden Öffnung im Tischplatten-Element 3 mittels Press-Sitz unbeweglich fixiert ist.

Fig. 12E zeigt den dritten Schritt des Einlegens des Tischplatten-Elements 3 mit Schwenken in die Horizontale bei gleichzeitigem Beaufschlagen der hinteren Rastschiene 7 und des hinteren Anschlags mit einem Rastbolzen 11. Der hier gezeigte Rastbolzen 11 entspricht einer zweiten Ausführungsform, in welcher er in einer entsprechenden Öffnung im Tischplatten-Element 3 mittels einer versenkten, angelöteten oder punktgeschweissten Scheibe um die Bolzenachse 26 drehbar fixiert ist. Zudem ist hier die Aussparung 15 markiert, in welche der Rastbolzen 11 gleich eintauchen wird. Diese Aussparung 15 weist einen Querschnitt auf, der grösser ist als der grösste Querschnitt 16 dieses Rastbolzens 11.

Fig. 12F zeigt den vierten Schritt des Einlegens des Tischplatten-Elements mit horizontalem Verschieben und Feststellen des Tischplatten-Elements mit einem Rastbolzen gemäss einer dritten Ausführungsform. Der hier gezeigte Rastbolzen 11 entspricht einer dritten Ausführungsform, in welcher er in einer entsprechenden Öffnung im Tischplatten-Element 3 mittels eines Federrings um die Bolzenachse 26 drehbar fixiert ist.

Besonders bevorzugt sind die Rastbolzen 10,11 nicht-verlierbar ausgebildet und ortsfest mit dem jeweiligen Tischplattenelement 3 verbunden. Somit kann jeder Rastbolzen 10,11 individuell am Tischplattenelement 3 festsitzen, indem er z.B. mittels eines Press-Sitzes und/oder mittels Anwenden von Klebemitteln, Verschweissen, oder Verlöten an einem bestimmten Ort eines Tischplattenelements 3 unbeweglich fixiert ist. Alternativ können die Rastbolzen 10,11 aber auch um ihre Bolzenachse 26 drehbar ausgebildet und doch ortsfest mit dem Tischplattenelement 3 verbunden sein, was beispielsweise auch durch Vernieten der Rastbolzen 10,11 mit den Tischplattenelementen 3 erzielt werden kann.

Der zumindest eine Spannhebel 20' der Tischplatten-Elemente 3 ist vorzugsweise an einer Unterseite 21 der Tischplatten-Elemente 3 angeordnet und gegen eine Tisch-Innenseite 22 oder gegen eine Tischaussenseite 23 der Anschlagfläche 19 schwenkbar angeordnet. Beliebige andere Anordnungen der Spannhebel 20' im Zusammenhang mit dem praktisch beliebigen Anordnen der Rastschienen 6,6',7,7' und Rastöffnungen 8,8',9,9' wird der Fachmann je nach Situation auswählen und so die Tischplatten-Elemente 3 am Rahmen 2 mittels Verspreizung oder Versperrung befestigen. Je nach Befestigungsart empfiehlt sich das Anbringen einer Federung an denjenigen Rastbolzen 10,11 und/oder Rastschienen 6,6',7,7', die auf der dem Feststellmechanismus 20 eines Tischplatten-Elements 3 gegenüber liegenden Seite (jedoch ebenfalls an der Unterseite 21) angeordnet sind.

Wie gezeigt umfasst jedes Tischplatten-Element 3 zumindest einen von den Rastbolzen beabstandeten Feststellmechanismus 20, der in einer Verriegelungsposition das Tischplatten-Element 3 feststellt und der den parallel zu einer Plattenachse 27 des Tischplatten-Elements 3 (vgl. Fig. 1-3 und Fig. 11) geführten Rastbolzen 10,11 in der Rastschiene 6,7 in einer Feststellposition hält. Dabei ist der Rastbolzen 10,11 in der Rastschiene 6,7 vorzugsweise gleitend geführt, wenn der Rastbolzen 10,11 unbeweglich im Tischplatten-Element 3 festsitzt. Wenn der Rastbolzen 10,11 drehbar im Tischplatten-Element 3 festsitzt, so ist er vorzugsweise gleitend und/oder rollend geführt. Zumindest ein Teil der Rastöffnungen 8,8',9,9' ist vorzugsweise zum Festhalten eines Rastbolzens 10,11 eines Tischplatten-Elements 3 in einer vertikalen Richtung ausgebildet, wobei die Rastbolzen 10,11 in der Verriegelungsposition des Tischplatten-Elements 3 in den Rastöffnungen 8,8',9,9' der

Rastschienen 6,6',7,7' in einer horizontalen Richtung geführt und in einer vertikalen Richtung fixiert sind.

Ein Verfahren zum Einbauen eines Tischplatten-Elements 3 umfasst vorzugsweise die folgenden Schritte:
a) Beaufschlagen einer Rastschiene 6',7 oder eines Rahmenstücks 5 mit einer Kante des Tischplatten-Elements 3;
b) Beaufschlagen eines Anschlags mit einer Kante des Tischplatten-Elements 3, wobei der Anschlag durch ein Rahmenstück 4 oder durch eine Rückwand 38 bereitgestellt wird;
c) Schwenken des Tischplatten-Elements 3 in die Horizontale bei gleichzeitigem Beaufschlagen des Anschlags und der Rastschiene 6',7 oder des Rahmenstücks 5; und
d) horizontales Verschieben und Feststellen des Tischplatten-Elements 3 mit dem Feststellmechanismus 20.

Bei dem eben beschriebenen Verfahren wird bevorzugt ein Spannhebel 20' als Feststellmechanismus 20 verwendet, wobei der Spannhebel 20' vorzugsweise an einer Unterseite 21 der Tischplatten-Elemente 3 angeordnet ist und beim Einbauen der Tischplatten-Elemente 3 um eine Achse 37 gegen eine Anschlagfläche 19 oder gegen eine der unteren Rastschienen 6',7' geschwenkt wird. Dabei beaufschlägt ein Spannbügel 34 in einer durch einen Feststellblock 35 des Spannhebels 20' definierten Verschluss-Lage federnd die Anschlagfläche 19 oder die Rastschiene 6',7' und übt eine Federkraft auf die Anschlagfläche 19 oder die Rastschiene 6',7' aus.

Ein Verfahren zum Auswechseln eines Tischplatten-Elements 3 umfasst vorzugsweise die folgenden Schritte, die vor dem Einbauen eines anderen Tischplatten-Elements 3 ausgeführt werden:
a) Lösen des Feststellmechanismus 20 und horizontales Verschieben des Tischplatten-Elements 3 bis zum Beaufschlagen des Anschlags und der Rastschiene 6',7 oder des Rahmenstücks 5;
b) Schwenken des Tischplatten-Elements 3 aus der Horizontale bei gleichzeitigem Beaufschlagen des Anschlags und der Rastschiene 6',7 oder des Rahmenstücks 5; und
c) Abheben des Tischplatten-Elements 3.

Gleiche Bezugszeichen beziehen sich auf entsprechende Merkmale auch wenn diese nicht in jedem Fall ausführlich beschieben sind. Beliebige Kombination der beschriebenen und/oder gezeigten Ausführungsformen und Varianten gehören zum Umfang der vorliegenden Erfindung.

**Bezugszeichenliste**

| | | | |
|---|---|---|---|
| 1 | Labortisch | 20' | Spannhebel |
| 2 | Rahmen | 21 | Unterseite von 3 |
| 3 | Tischplatten-Element | 22 | Tisch-Innenseite |
| 4 | vorderes Rahmenstück | 23 | Tisch-Aussenseite |
| 5 | hinteres Rahmenstück | 24 | weiteres Rahmenstück |
| 6 | obere vordere Rastschiene | 25 | weiteres Rahmenstück |
| 6' | untere vordere Rastschiene | 26 | Bolzenachse |
| 7 | obere hintere Rastschiene | 27 | Plattenachse |
| 7' | untere hintere Rastschiene | 28 | Einlaufschräge |
| 8 | obere vordere Rastöffnung | 29 | obere Plattenebene |
| 8' | untere vordere Rastöffnung | 30 | untere Plattenebene |
| 9 | obere hintere Rastöffnung | 31 | Halteschiene |
| 9' | untere hintere Rastöffnung | 32 | Rastnocken |
| 10 | vorderer Rastbolzen | 33 | Verstärkungsleiste |
| 11 | hinterer Rastbolzen | 34 | Spannbügel |
| 12 | Abstand | 35 | Feststellblock |
| 13 | erster Haltesteg | 36 | Handgriff |
| 13' | zweiter Haltesteg | 37 | Achse |
| 14 | Nut | 38 | Rückwand |
| 15 | Aussparung | 39 | Aussparungsachse |
| 15' | Langloch | 40 | Ausschnitt |
| 16 | grösster Querschnitt von 10,11 | 41 | Überdrehschutz |
| 17 | reduzierter Querschnitt von 10,11 | 42 | Halteportion |
| 18 | Verengung | 43 | Breite von 3 |
| 19 | Anschlagfläche | 44 | Fuge |
| 20 | Feststellmechanismus | | |

## Patentansprüche

1. Labortisch (1), der zumindest einen Rahmen (2) mit einem vorderen Rahmenstück (4) und einem diesem gegenüberliegenden hinteren Rahmenstück (5) sowie an diesem zumindest einen Rahmen (2) positionierbare, austauschbare Tischplatten-Elemente (3) umfasst, wobei der Rahmen (2) zumindest eine am vorderen oder hinteren Rahmenstück (4,5) angeordnete Rastschiene (6,6',7,7') mit Rastöffnungen (8,8',9,9') umfasst, wobei jede dieser Rastöffnungen (8,8',9,9') zum Einführen und zum gleitenden Führen eines Rastbolzens (10,11) eines Tischplatten-Elements (3) ausgebildet und angeordnet ist, und wobei die Tischplatten-Elemente (3) zumindest einen Rastbolzen (10,11) umfassen, der zum Einführen und zum gleitenden Führen in eine(r) der Rastöffnungen (8,8',9,9') dieser Rastschienen (6,6',7,7') ausgebildet und angeordnet ist, **dadurch gekennzeichnet, dass** jedes Tischplatten-Element (3) zumindest einen von den Rastbolzen (10,11) beabstandeten Feststellmechanismus (20) umfasst, der in einer Verriegelungsposition das Tischplatten-Element (3) feststellt und den parallel zu einer Plattenachse (27) des Tischplatten-Elements (3) geführten Rastbolzen (10,11) in der Rastschiene (6,7) in einer Feststellposition hält.

2. Labortisch (1) nach Anspruch 1, **dadurch gekennzeichnet, dass** die Rastöffnungen (8,9) der Rastschienen (6,7) in einem regelmässigen Abstand (12) angeordnet sind.

3. Labortisch (1) nach Anspruch 1 oder 2, **dadurch gekennzeichnet, dass** die Rastbolzen (10,11) nicht-verlierbar ausgebildet und ortsfest mit dem jeweiligen Tischplatten-Element (3) verbunden sind.

4. Labortisch (1) nach Anspruch 2 oder 3, **dadurch gekennzeichnet, dass** die Tischplatten-Elemente (3) eine Breite (43) aufweisen, die zumindest annähernd dem regelmässigen Abstand (12) oder zumindest annähernd einem Vielfachen dieses Abstandes (12) entspricht.

5. Labortisch (1) nach einem der Ansprüche 2 bis 4, **dadurch gekennzeichnet, dass** die Rastbolzen (10,11) von Tischplatten-Elementen (3) mit mindestens zwei vorderen Rastbolzen (10) oder mit mindestens zwei hinteren Rastbolzen (11) im gleichen Abstand (12) oder in einem Vielfachen dieses Abstands (12) angeordnet sind.

6. Labortisch (1) nach einem der vorhergehenden Ansprüche, **dadurch gekennzeichnet, dass** die Rastöffnungen (8,8',9,9') der Rastschienen (6,6',7,7') ohne Haltesteg (13,13') ausgebildet sind.

7. Labortisch (1) nach einem der Ansprüche 1 bis 5, **dadurch gekennzeichnet, dass** in den Rastöffnungen (8,8',9,9') der Rastschienen (6,6',7,7') ein erster Haltesteg (13) oder ein zweiter Haltesteg (13') angeordnet ist, wobei diese Haltestege in horizontaler Richtung verlaufen.

8. Labortisch (1) nach Anspruch 5 oder 6, **dadurch gekennzeichnet, dass** die Rastbolzen (10,11) eine zylindrische Form mit durchgehend gleichem Querschnitt aufweisen.

9. Labortisch (1) nach Anspruch 7, **dadurch gekennzeichnet, dass** die Rastbolzen (10,11) einen kreisförmigen Querschnitt aufweisen und eine Nut (14) umfassen, deren Breite der Höhe des ersten Haltestegs (13) in den Rastöffnungen (8,8',9,9') der Rastschienen (6,6',7,7') angepasst ist.

10. Labortisch (1) nach Anspruch 7, **dadurch gekennzeichnet, dass** die Rastbolzen (10,11) einen reduzierten kreisförmigen Querschnitt (17) mit einer freien Höhe umfassen, die der Höhe des zweiten Haltestegs (13') in den Rastöffnungen (8,8',9,9') der Rastschienen (6,6',7,7') angepasst ist.

11. Labortisch (1) nach einem Ansprüche 9 oder 10, **dadurch gekennzeichnet, dass** die ersten oder zweiten Haltestege (13,13') in den Rastöffnungen (8,8',9,9') der Rastschienen (6,6',7,7') einseitig in horizontaler Richtung offen ausgebildet sind.

12. Labortisch (1) nach Anspruch 11, **dadurch gekennzeichnet, dass** die Haltestege (13,13') in den Rastöffnungen (8,8',9,9') der Rastschienen (6,6',7,7') zum vertikalen Einführen der Rastbolzen (10,11) eine den Rastbolzen (10,11) angepasste Aussparung (15) aufweisen, deren Querschnitt grösser ist als ein grösster Querschnitt (16) der Rastbolzen (10,11).

13. Labortisch (1) nach Anspruch 11 oder 12, **dadurch gekennzeichnet, dass** die Haltestege (13,13') in den Rastöffnungen (8,8',9,9') der Rastschienen (6,6',7,7') Halteportionen (42) zum vertikalen Festhalten und zum horizontalen Führen der Rastbolzen (10,11) aufweisen, wobei die Halteportionen (42) um eine Verengung (18) beabstandet sind, und wobei diese Verengung (18) weiter ist als ein reduzierter Querschnitt (17) der Rastbolzen (10,11) im Bereich der Nut (14), aber enger ist als der grösste Querschnitt (16) der Rastbolzen (10,11).

14. Labortisch (1) nach einem der vorhergehenden Ansprüche, **dadurch gekennzeichnet, dass** die Rastschienen (6,6',7,7') so an den einander gegenüber liegenden Rahmenstücken (4,5) befestigt sind, dass die Rastöffnungen (8,8',9,9') der beiden Rastschienen (6,6',7,7') gegen einander oder auseinander gerichtet sind.

15. Labortisch (1) nach einem der Ansprüche 1 bis 12, **dadurch gekennzeichnet, dass** die Rastschienen (6,6',7,7') so an den einander gegenüber liegenden Rahmenstücken (4,5) befestigt sind, dass die Rastöffnungen (8,8',9,9') der beiden Rastschienen (6,6',7,7') gleichgerichtet sind.

16. Labortisch (1) nach einem der vorhergehenden Ansprüche, **dadurch gekennzeichnet, dass** er Tischplatten-Elemente (3) in einer oberen Plattenebene (29) und/oder in einer unteren Plattenebene (30) umfasst, wobei alle Tischplatten-Elemente (3) im eingebauten Zustand im Wesentlichen horizontal ausgerichtet sind.

17. Labortisch (1) nach Anspruch 16, **dadurch gekennzeichnet, dass** zumindest ein Teil der Rastöffnungen (8,8',9,9') zum Festhalten eines Rastbolzens (10,11) eines Tischplatten-Elements (3) in einer vertikalen Richtung ausgebildet ist, wobei die Rastbolzen (10,11) in der Verriegelungsposition des Tischplatten-Elements (3) in den Rastöffnungen (8,8',9,9') der Rastschienen (6,6',7,7') in einer horizontalen Richtung geführt und in einer vertikalen Richtung fixiert sind.

18. Labortisch (1) nach einem der vorhergehenden Ansprüche, **dadurch gekennzeichnet, dass** der Rahmen (2) eine Anschlagfläche (19) umfasst, die an dem vorderen oder hinteren der einander gegenüber liegenden Rahmenstücke (4,5) angeordnet ist und die ausgewählt ist aus der Gruppe von Anschlagflächen (19), welche eine Aussenfläche eines Rahmenstücks (4,5), einen an einem Rahmenstück (4,5) hochstehenden Steg, einen über ein Rahmenstück (4,5) hinaus stehenden Steg sowie Kombinationen dieser Anschlagflächen (19) umfasst.

19. Labortisch (1) nach Anspruch 18, **dadurch gekennzeichnet, dass** die eingebauten Tischplatten-Elemente (3) der oberen Plattenebene (29) über das vordere Rahmenstück (4) und die Anschlagfläche (19) am vorderen Rahmenstück (4) hinaus stehen.

20. Labortisch (1) nach Anspruch 18, **dadurch gekennzeichnet, dass** die eingebauten Tischplatten-Elemente (3) der unteren Plattenebene (30) seitlich an die einander gegenüber angeordneten Rahmenstücke (4,5) angenähert sind.

21. Labortisch (1) nach einem der Ansprüche 18 bis 20, **dadurch gekennzeichnet, dass** der zumindest eine Feststellmechanismus (20) an einer Unterseite (21) der Tischplatten-Elemente (3) angeordnet ist und beim Einbauen der Tischplatten-Elemente (3) um eine Achse (37) gegen die Anschlagfläche (19) oder gegen eine der Rastschienen (6',7') schwenkbar ausgebildet ist.

22. Labortisch (1) nach Anspruch 21, **dadurch gekennzeichnet, dass** der zumindest eine Feststellmechanismus (20) der Tischplatten-Elemente (3) als Spannhebel (20') ausgebildet ist, wobei dieser Spannhebel (20') einen Handgriff (36), einen Feststellblock (35) und einen Spannbügel (34) umfasst, wobei der Feststellblock (35) eine Verschluss-Lage des Spannhebels (20') definiert, und wobei der Spannbügel (34) in dieser Verschluss-Lage des Spannhebels (20') die Anschlagfläche (19) oder die Rastschiene (6',7') federnd beaufschlägt und eine Federkraft auf die Anschlagfläche (19) oder die Rastschiene (6',7') ausübt.

23. Labortisch (1) nach einem der vorhergehenden Ansprüche, **dadurch gekennzeichnet, dass** die einander gegenüber angeordneten Rahmenstücke (4,5) parallel zu einander angeordnet sind, und dass der Rahmen (2) zwei weitere Rahmenstücke (24,25) umfasst und als rechteckiger Rahmen ausgebildet ist.

24. Verfahren zum Bereitstellen eines Labortischs (1), der zumindest einen Rahmen (2) mit einem vorderen und einem diesem gegenüberliegenden hinteren Rahmenstück (4,5) sowie an diesem zumindest einen Rahmen (2) positionierbare Tischplatten-Elemente (3) umfasst, wobei der Rahmen (2) zumindest eine am vorderen oder hinteren Rahmenstück (4,5) angeordnete Rastschiene (6,6',7,7') mit Rastöffnungen (8,8',9,9') umfasst, wobei jede dieser Rastöffnungen (8,8',9,9') zum Einführen und zum gleitenden Führen eines Rastbolzens (10,11) eines Tischplatten-Elements (3) ausgebildet und angeordnet ist, und wobei die Tischplatten-Elemente (3) zumindest einen Rastbolzen (10,11) umfassen, **dadurch gekennzeichnet, dass** jedes Tischplatten-Element (3) in diesen Rahmen (2) eingebaut wird, indem der zumindest eine Rastbolzen (10,11) dieses Tischplatten-Elements (3) in eine der Rastöffnungen (8,8',9,9') dieser Rastschienen (6,6',7,7') eingeführt und darin geführt wird, **und** dass jedes Tischplatten-Element (3) zumindest einen von den Rastbolzen (10,11) beabstandeten Feststellmechanismus (20) umfasst, wobei der Feststellmechanismus (20) in eine Verriegelungsposition gebracht wird, wodurch das Tischplatten-Element (3) festgestellt und der Rastbolzen (10,11) in der Rastschiene (6,7) in einer Richtung parallel zu einer Plattenachse (27) des Tischplatten-Elements (3) in eine Feststellposition gleitet und dort fixiert wird.

25. Verfahren nach Anspruch 24, **dadurch gekennzeichnet, dass** die Tischplatten-Elemente (3) im Wesentlichen horizontal ausgerichtet und in einer oberen Plattenebene (29) und/oder in einer unteren Plattenebene (30) in diesen Rahmen (2) eingebaut werden.

## Claims

1. Laboratory table (1), which comprises at least one frame (2) having a front frame part (4) and a rear frame part (5) opposite thereto as well as replaceable tabletop elements (3) positionable on this at least one frame (2), the frame (2) comprising at least one detent rail (6,6',7,7') having detent openings (8,8',9,9'), which is arranged on the front or rear frame part (4, 5), each of these detent openings (8,8',9,9') being implemented and arranged for insertion and for sliding guiding of a detent bolt (10,11) of a tabletop element (3), and the tabletop elements (3) comprising at least one detent bolt (10,11), which is implemented and arranged for the insertion and for the sliding guiding in one of the detent openings (8,8',9,9') of these detent rails (6,6',7,7'), **characterized in that** each tabletop element (3) comprises at least one fixing mechanism (20) spaced apart from the detent bolt (10,11), which fixes the tabletop element (3) in a locking position and holds the detent bolt (10,11), which is guided parallel to a tabletop axis (27) of the tabletop element (3), in the detent rail (6,7) in a fixing position.

2. Laboratory table (1) according to Claim 1, **characterized in that** the detent openings (8,9) of the detent rails (6,7) are arranged at a regular distance (12).

3. Laboratory table (1) according to Claim 1 or 2, **characterized in that** the detent bolts (10,11) are implemented as captive and are connected fixed in place to the respective tabletop element (3).

4. Laboratory table (1) according to Claim 2 or 3, **characterized in that** the tabletop elements (3) have a width (43), which at least approximately corresponds to the regular distance (12) or at least approximately corresponds to a multiple of this distance (12).

5. Laboratory table (1) according to one of Claims 2 to 4, **characterized in that** the detent bolts (10,11) of tabletop elements (3) having at least two front detent bolts (10) or having at least two rear detent bolts (11) are arranged at the same distance (12) or in a multiple of this distance (12).

6. Laboratory table (1) according to one of the preceding claims, **characterized in that** the detent openings (8,8',9,9') of the detent rails (6,6',7,7') are implemented without a holding web (13,13').

7. Laboratory table (1) according to one of Claims 1 to 5, **characterized in that** a first holding web (13) or a second holding web (13') is arranged in the detent openings (8,8',9,9') of the detent rails (6,6',7,7'), these holding webs extending in horizontal direction.

8. Laboratory table (1) according to Claim 5 or 6, **characterized in that** the detent bolts (10,11) have a cylindrical shape with continuously identical cross section.

9. Laboratory table (1) according to Claim 7, **characterized in that** the detent bolts (10,11) have a circular cross section and comprise a groove (14), whose width is adapted to the height of the first holding web (13) in the detent openings (8,8',9,9') of the detent rails (6,6',7,7').

10. Laboratory table (1) according to Claim 7, **characterized in that** the detent bolts (10,11) comprise a reduced circular cross section (17) having a free height which is adapted to the height of the second holding web (13') in the detent openings (8,8',9,9') of the detent rails (6,6',7,7').

11. Laboratory table (1) according to one of Claims 9 or 10, **characterized in that** the first or second holding webs (13,13') in the detent openings (8,8',9,9') of the detent rails (6,6',7,7') are implemented as open on one side in horizontal direction.

12. Laboratory table (1) according to Claim 11, **characterized in that** the holding webs (13,13') in the detent openings (8,8',9,9') of the detent rails (6,6',7,7'), for the vertical insertion of the detent bolts (10,11), have a recess (15) adapted to the detent bolt (10,11), whose cross section is larger than a largest cross section (16) of the detent bolts (10,11).

13. Laboratory table (1) according to Claim 11 or 12, **characterized in that** the holding webs (13,13') in the detent openings (8,8',9,9') of the detent rails (6,6',7,7') have holding portions (42) for vertically fixing and horizontally guiding the detent bolts (10,11), the holding portions (42) being spaced apart by a constriction (18), and this constriction (18) being wider than a reduced cross section (17) of the detent bolts (10,11) in the area of the groove (14), but being narrower than the largest cross section (16) of the detent bolts (10,11).

14. Laboratory table (1) according to one of the preceding claims, **characterized in that** the detent rails (6,6',7,7') are fastened on the opposing frame parts (4,5) so that the detent openings (8,8',9,9') of the two detent rails (6,6',7,7') are oriented toward one another or away from one another.

15. Laboratory table (1) according to one of the Claims 1 to 12, **characterized in that** the detent rails (6,6',7,7') are fastened on the opposing frame parts (4, 5) so that the detent openings (8,8',9,9') of the two detent rails (6,6',7,7') are oriented in the same direction.

16. Laboratory table (1) according to one of the preceding claims, **characterized in that** it comprises tabletop elements (3) in an upper tabletop level (29) and/or in a lower tabletop level (30), all tabletop elements (3) being aligned essentially horizontally in an installed state.

17. Laboratory table (1) according to Claim 16, **characterized in that** at least a part of the detent openings (8,8',9,9') is implemented for fixing a detent bolt (10,11) of a tabletop element (3) in a vertical direction, the detent bolts (10,11), in the locking position of the tabletop element (3), being guided in a horizontal direction and being fixed in the vertical direction in the detent openings (8,8',9,9') of the detent rails (6,6',7,7').

18. Laboratory table (1) according to one of the preceding claims, **characterized in that** the frame (2) comprises a stop surface (19), which is arranged on the front or rear of the opposing frame parts (4,5) and which is selected from the group of stop surfaces (19) which comprises an outer surface of a frame part (4,5), an upright web on a frame part (4,5), a web protruding beyond a frame part (4,5), and combinations of these stop surfaces (19).

19. Laboratory table (1) according to Claim 18, **characterized in that** the installed tabletop elements (3) of the upper tabletop level (29) protrude beyond the front frame part (4) and the stop surface (19) on the front frame part (4).

20. Laboratory table (1) according to Claim 18, **characterized in that** the installed tabletop elements (3) of the lower tabletop level (30) laterally approach the frame parts (4,5) arranged opposite to one another.

21. Laboratory table (1) according to one of Claims 18 to 20, **characterized in that** the at least one fixing mechanism (20) is arranged on a lower side (21) of the tabletop elements (3) and is implemented as pivotable around an axis (37) toward the stop surface (19) or toward one of the detent rails (6',7') during the installation of the tabletop elements (3).

22. Laboratory table (1) according to Claim 21, **characterized in that** the at least one fixing mechanism (20) of the tabletop elements (3) is implemented as a clamping lever (20'), this clamping lever (20') comprising a handle (36), a fixing block (35), and a clamping bow (34), the fixing block (35) defining a closure location of the clamping lever (20'), and the clamping bow (34), in this closure location of the clamping lever (20'), being applied in a springy manner to the stop surface (19) or the detent rail (6',7') and exerting a spring force on the stop surface (19) or the detent rail (6',7').

23. Laboratory table (1) according to one of the preceding claims, **characterized in that** the frame parts (4,5) arranged opposite to one another are arranged parallel to one another, and the frame (2) comprises two further frame parts (24,25) and is implemented as a rectangular frame.

24. Method for providing a laboratory table (1), which comprises at least one frame (2) having a front frame part and a rear frame part (4,5) opposite thereto as well as tabletop elements (3) positionable on this at least one frame (2), the frame (2) comprising at least one detent rail (6,6',7,7') having detent openings (8,8',9,9'), which is arranged on the front or rear frame part (4,5), each of these detent openings (8,8',9,9') being implemented and arranged for the insertion and for the sliding guiding of a detent bolt (10,11) of a tabletop element (3), and the tabletop elements (3) comprising at least one detent bolt (10,11), **characterized in that** each tabletop element (3) is installed in this frame (2), **in that** the at least one detent bolt (10,11) of this tabletop element (3) is inserted into one of the detent openings (8,8',9,9') of these detent rails (6,6',7,7') and guided therein, and **in that** each tabletop element (3) comprises at least one fixing mechanism (20) spaced apart from the detent bolt (10,11), the fixing mechanism (20) being moved into a locking position, whereby the tabletop element (3) is fixed and the detent bolt (10,11) slides in the detent rail (6,7) in a direction parallel to a tabletop axis (27) of the tabletop element (3) into a fixing position and is fixed there.

25. Method according to Claim 24, **characterized in that** the tabletop elements (3) are aligned essentially horizontally and are installed in this frame (2) in an upper tabletop level (29) and/or in a lower tabletop level (30).

## Revendications

1. Table de laboratoire (1) comprenant au moins un cadre (2) avec un élément de cadre avant (4) et un élément de cadre arrière opposé (5) ainsi que des éléments de dessus de table (3) interchangeables pouvant être positionnés sur cet au moins un cadre (2), le cadre (2) comprenant au moins un rail d'encliquetage (6,6',7,7') agencé sur l'élément de cadre avant ou arrière (4,5) avec des ouvertures d'encliquetage (8,8',9,9'), chacune de ces ouvertures d'encliquetage (8,8',9,9') étant conçue et agencée pour introduire et guider par coulissement un boulon d'arrêt (10,11) d'un élément de dessus de table (3), les éléments de dessus de table (3) comprenant au moins un boulon d'arrêt (10,11) qui est conçu et agencé pour être introduit et guidé par coulissement dans une des ouvertures d'encliquetage (8,8',9,9') de ces rails d'encliquetage (6,6',7,7'), **caractérisée en ce que** chaque élément de dessus de table (3) comprend au moins un mécanisme de verrouillage (20) à distance du boulon d'arrêt (10,11), lequel immobilise l'élément de dessus de table (3) dans une position de verrouillage et maintient le boulon d'arrêt (10,11) dans le rail d'encliquetage (6,7) guidé parallèlement à un axe de panneau (27) de l'élément de dessus de table (3) dans une position de verrouillage.

2. Table de laboratoire (1) selon la revendication 1, **caractérisée en ce que** les ouvertures d'encliquetage (8,9) des rails d'encliquetage (6,7) sont agencées à une distance régulière (12).

3. Table de laboratoire (1) selon la revendication 1 ou 2, **caractérisée en ce que** les boulons d'arrêt (10,11) sont réalisés non perdables et sont raccordés fixement à l'élément de dessus de table (3) correspondant.

4. Table de laboratoire (1) selon la revendication 2 ou 3, **caractérisée en ce que** les éléments de dessus de table (3) présentent une largeur (43) qui correspond au moins approximativement à la distance régulière (12) ou au moins approximativement à un multiple de cette distance (12).

5. Table de laboratoire (1) selon l'une des revendications 2 à 4, **caractérisée en ce que** les boulons d'arrêt (10,11) des éléments de dessus de table (3) sont agencés avec au moins deux boulons d'arrêt avant (10) ou avec au moins deux boulons d'arrêt arrière (11) à distance égale (12) ou à un multiple de cette distance (12).

6. Table de laboratoire (1) selon l'une des revendications précédentes, **caractérisée en ce que** les ouvertures d'encliquetage (8,8',9,9') des rails d'encliquetage (6,6',7,7') sont réalisées sans barre de retenue (13,13').

7. Table de laboratoire (1) selon l'une des revendications 1 à 5, **caractérisée en ce qu'**il est agencé dans les ouvertures d'encliquetage (8,8',9,9') des rails d'encliquetage (6,6',7,7') une première barre de retenue (13) ou une deuxième barre de retenue (13'), ces barres de retenue s'étendant horizontalement.

8. Table de laboratoire (1) selon la revendication 5 ou 6, **caractérisée en ce que** les boulons d'arrêt (10,11) présentent une forme cylindrique avec une section transversale identique de bout en bout.

9. Table de laboratoire (1) selon la revendication 7, **caractérisée en ce que** les boulons d'arrêt (10,11) présentent une section transversale circulaire et comprennent un écrou (14) dont la largeur est adaptée à la hauteur de la première barre de retenue (13) dans les ouvertures d'encliquetage (8,8',9,9') des rails d'encliquetage (6,6,7,7').

10. Table de laboratoire (1) selon la revendication 7, **caractérisée en ce que** les boulons d'arrêt (10,11) comprennent une section transversale circulaire réduite (17) avec une hauteur libre qui est adaptée à la hauteur de la deuxième barre de retenue (13') dans les ouvertures d'encliquetage (8,8',9,9') des rails d'encliquetage (6,6',7,7').

11. Table de laboratoire (1) selon l'une des revendications 9 ou 10, **caractérisée en ce que** les premières ou les deuxièmes barres de retenue (13,13') dans les ouvertures d'encliquetage (8,8',9,9') des rails d'encliquetage (6,6',7,7') sont réalisées ouvertes sur un côté dans le sens horizontal.

12. Table de laboratoire (1) selon la revendication 11, **caractérisée en ce que** les barres de retenue (13,13') dans les ouvertures d'encliquetage (8,8',9,9') des rails d'encliquetage (6,6',7,7') présentent, pour introduire verticalement les boulons d'arrêt (10,11) un évidement (15) adapté aux boulons d'arrêt (10,11), dont la section transversale est supérieure à une section transversale maximale (16) des boulons d'arrêt (10,11).

13. Table de laboratoire (1) selon la revendication 11 ou 12, **caractérisée en ce que** les barres de retenue (13,13') dans les ouvertures d'encliquetage (8,8',9,9') des rails d'encliquetage (6,6,7,7') présentent des portions de retenue (42) pour maintenir verticalement et pour guider horizontalement les boulons d'arrêt (10,11), les portions de retenue (42) étant situées à distance autour d'un rétrécissement (18), ce rétrécissement (18) étant plus large qu'une section transversale réduite (17) des boulons d'arrêt (10,11) dans la zone de l'écrou (14), mais étant plus étroit que la section transversale maximale (16) des boulons d'arrêt (10,11).

14. Table de laboratoire (1) selon l'une des revendications précédentes, **caractérisée en ce que** les rails d'encliquetage (6,6',7,7') sont fixés aux éléments de cadre opposés (4,5) de façon à ce que les ouvertures d'encliquetage (8,8',9,9') des deux rails d'encliquetage (6,6',7,7') soient orientées à l'opposé les unes des autres ou de façon divergente.

15. Table de laboratoire (1) selon l'une des revendications 1 à 12, **caractérisée en ce que** les rails d'encliquetage (6,6',7,7') sont fixés sur les éléments de cadre opposés (4,5) de façon à ce que les ouvertures d'encliquetage (8,8',9,9') des deux rails d'encliquetage (6,6',7,7') soient orientées dans le même sens.

16. Table de laboratoire (1) selon l'une des revendications précédentes, **caractérisée en ce qu'**elle comprend des éléments de dessus de table (3) sur un panneau supérieur (29) et/ou un panneau inférieur (30), tous les éléments de dessus de table (3), à l'état monté, étant orientés essentiellement de façon horizontale.

17. Table de laboratoire (1) selon la revendication 16, **caractérisée en ce qu'**au moins une partie des ouvertures d'encliquetage (8,8',9,9') est conçue pour maintenir un boulon d'arrêt (10,11) d'un élément de dessus de table (3) dans une direction verticale, les boulons d'arrêt (10,11) étant guidés dans la direction horizontale dans la position de verrouillage des éléments de dessus de table (3) dans les ouvertures d'encliquetage (8,8',9,9') des rails d'encliquetage (6,6',7,7') et étant fixés dans un sens vertical.

18. Table de laboratoire (1) selon l'une des revendications précédentes, **caractérisée en ce que** le cadre (2) comprend une surface de butée (19) qui est agencée sur l'élément de cadre avant ou arrière des éléments de cadre opposés (4,5) et qui est choisie à partir d'un groupe de surfaces de butée (19) qui comprend une surface extérieure d'un élément de cadre (4,5), une tige surélevée par rapport à l'élément de cadre (4,5), une tige en saillie au-dessus d'un élément de cadre (4,5) ainsi que des combinaisons de ces surfaces de butée (19).

19. Table de laboratoire (1) selon la revendication 18, **caractérisée en ce que** les éléments de dessus de table (3) intégrés du panneau supérieur (29) dépassent l'élément de cadre avant (4) et la surface de butée (19) au niveau de l'élément de cadre avant (4).

20. Table de laboratoire (1) selon la revendication 18, **caractérisée en ce que** les éléments de dessus de table (3) intégrés du panneau inférieur (30) se rapprochent latéralement des éléments de cadre opposés (4,5).

21. Table de laboratoire (1) selon l'une des revendications 18 à 20, **caractérisée en ce que** le au moins un système de verrouillage (20) est agencé sur le côté inférieur (21) des éléments de dessus de table (3) et **en ce que**, lors du montage des éléments de dessus de table (3) il est réalisé mobile autour d'un axe (37) contre la surface de butée (19) ou contre l'un des rails d'encliquetage (6',7').

22. Table de laboratoire (1) selon la revendication 21, **caractérisée en ce que** le au moins un mécanisme de verrouillage (20) des éléments de dessus de table (3) est réalisé sous la forme d'un levier de serrage (20'), ce levier de serrage (20') comprenant un manche (36), un bloc de verrouillage (35) et un étrier de serrage (34), le bloc de verrouillage (35) définissant une position de verrouillage du levier de serrage (20') et l'étrier de serrage (34), dans cette position de verrouillage du levier de serrage (20'), sollicite élastiquement la surface de butée (19) ou les rails d'encliquetage (6',7') et exerce une force élastique sur la surface de butée (19) ou sur le rail d'encliquetage (6',7').

23. Table de laboratoire (1) selon l'une des revendications précédentes, **caractérisée en ce que** les éléments de cadre opposés (4,5) sont agencés parallèles entre eux et **en ce que** le cadre (2) comprend deux autres éléments de cadre (24,25) et est réalisé sous la forme d'un cadre rectangulaire.

24. Procédé pour préparer une table de laboratoire (1) comprenant au moins un cadre (2) avec un élément de cadre avant et un élément de cadre arrière opposé (4,5) ainsi que des éléments de dessus de table (3) pouvant être positionnés sur ce au moins un cadre (2), le cadre (2) comprenant au moins un rail d'encliquetage (6,6',7,7') agencé sur l'élément de cadre avant ou arrière (4,5) avec des ouvertures d'encliquetage (8,8',9,9'), chacune de ces ouvertures d'encliquetage (8,8',9,9') étant conçue et agencée pour introduire et guider par coulissement un boulon d'arrêt (10,11) d'un élément de dessus de table (3), les éléments de dessus de table (3) comprenant au moins un boulon d'arrêt (10,11), **caractérisé en ce que** chaque élément de dessus de table (3) est monté sur ce cadre (2) et **en ce que** le au moins un boulon d'arrêt (10,11) de cet élément de dessus de table (3) est introduit et guidé dans l'une des ouvertures d'encliquetage (8,8',9,9') de ces rails d'encliquetage (6,6',7,7') et **en ce que** chaque élément de dessus de table (3) comprend au moins un mécanisme de verrouillage (20) à distance des boulons d'arrêt (10,11), le mécanisme de verrouillage (20) étant amené en position de verrouillage, l'élément de dessus de table (3) étant ainsi bloqué et le boulon d'arrêt (10,11) étant ainsi coulissé dans le rail d'encliquetage (6,7) dans une direction parallèle à un axe de panneau (27) de l'élément de dessus de table (3) dans une position de verrouillage et y est fixé.

25. Procédé selon la revendication 24, **caractérisé en ce que** les éléments de dessus de table (3) sont essentiellement alignés horizontalement et sont montés sur un panneau supérieur (29) et/ou sur un panneau inférieur (30) sur ce cadre (2).
